Europäisches Patentamt

European Patent Office

Office européen des brevets

(19)

(11) **EP 0 784 783 B1**

(12) **FASCICULE DE BREVET EUROPEEN**

(45) Date de publication et mention
de la délivrance du brevet:
**02.01.2002 Bulletin 2002/01**

(51) Int Cl.⁷: **G01B 17/00**, G06K 11/14

(21) Numéro de dépôt: **95934180.1**

(86) Numéro de dépôt international:
**PCT/FR95/01305**

(22) Date de dépôt: **06.10.1995**

(87) Numéro de publication internationale:
**WO 96/11378 (18.04.1996 Gazette 1996/17)**

(54) **DISPOSITIF D'ACQUISITION DE COORDONNEES D'UNE SOURCE ACOUSTIQUE APPLIQUEE A UNE PLAQUE**

VORRICHTUNG ZUR KOORDINATENERFASSUNG EINER AKUSTISCHEN QUELLE, DIE AUF EINER PLATTE AUFGEBRACHT IST

DEVICE FOR THE ACQUISITION OF COORDINATES OF AN ACOUSTIC SOURCE APPLIED TO A PLATE

(84) Etats contractants désignés:
**DE FR GB**

(30) Priorité: **06.10.1994 FR 9411954**

(43) Date de publication de la demande:
**23.07.1997 Bulletin 1997/30**

(73) Titulaire: **UNIVERSITE PIERRE ET MARIE CURIE PARIS VI**
**75005 Paris (FR)**

(72) Inventeurs:
• **NIKOLOVSKI, Jean-Pierre**
**F-75013 Paris (FR)**

• **FOURNIER, Danièle**
**F-75015 Paris (FR)**

(74) Mandataire: **Le Forestier, Eric et al**
**Cabinet Régimbeau 20, rue de Chazelles**
**75847 Paris cedex 17 (FR)**

(56) Documents cités:
**EP-A- 0 584 695**      **EP-A- 0 585 842**
**FR-A- 2 357 865**      **FR-A- 2 575 281**
**US-A- 3 857 022**

**Description**

La présente invention concerne d'une façon générale les dispositifs d'acquisition de coordonnées, et plus particulièrement un dispositif de mesure des coordonnées x/y d'un stylet sur une surface d'une plaque basé sur la mesure du temps de propagation d'ondes acoustiques dans la plaque.

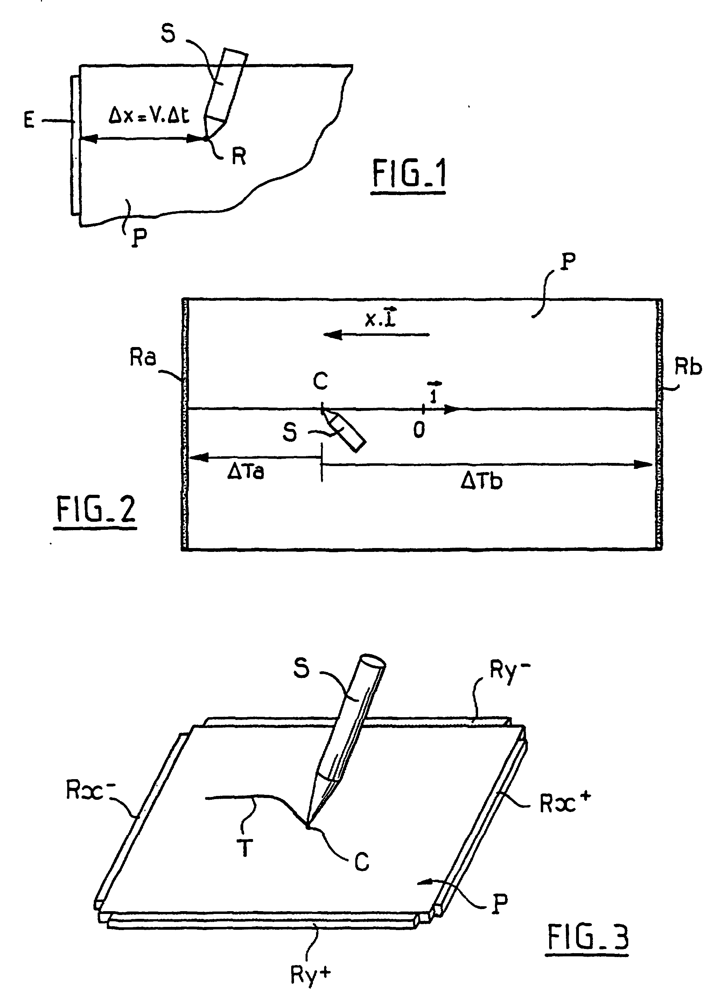

On a représenté sur la figure 1, un dispositif de détection connu, pour la détection de l'une des coordonnées. Ce mode de détection est dit "direct".

La plaque, de forme carrée ou rectangulaire, est indiquée en P. Un stylet muni de moyens transducteurs pour recevoir des ondes acoustiques et les convertir en signaux électriques, est indiqué en S. Un émetteur E, par exemple de type piézo-électrique, est de forme allongée et adjacent à un bord de la plaque P.

En mesurant l'intervalle de temps $\Delta t$ entre les instants d'émission et de réception, et en connaissant la vitesse de propagation V, on en déduit la distance $\Delta x$ entre le bord de la plaque et le point de contact R du stylet avec la surface.

Pour déterminer les deux coordonnées $\Delta x$ et $\Delta y$, on utilise deux émetteurs sur deux côtés adjacents de la plaque, les mesures de temps étant effectuées séquentiellement. Sur les côtés opposés, on prévoit des amortisseurs des ondes acoustiques, destinés à éviter la propagation parasite d'ondes réfléchies.

Un tel dispositif est connu par FR-A-2 575 281.

Ce dispositif présente toutefois certains inconvénients. Tout d'abord, il nécessite une synchronisation entre les circuits d'émission et de réception pour pouvoir calculer les variables $\Delta t$. Ainsi, même si le stylet est utilisé en émetteur, il est nécessairement relié aux circuits par un câble électrique.

Un autre inconvénient du dispositif connu est qu'il est relativement sensible aux perturbations, dans la mesure où le stylet reçoit non seulement les ondes émises par les émetteurs de bord, mais également toutes ondes parasites engendrées dans la plaque. Enfin ce type de dispositif connu peut s'avérer relativement sensible aux variations d'inclinaison du stylet, ou à la rotation de celui-ci sur lui-même, dans la mesure où la détection des ondes dans la plaque peut être substantiellement affectée.

On connaît également, notamment par EP-A-0 169 538, EP-A-0 368 351, EP-A-0 423 843 et EP-A-0 585 842 des dispositifs dans lesquels on mesure l'intervalle de temps qui s'écoule entre l'émission d'impulsions par un stylet et la réception des ondes acoustiques transmises par la plaque au niveau de quatre détecteurs essentiellement ponctuels fixés la plaque.

Ces dispositifs connus présentent toutefois les mêmes inconvénients que celui décrit plus haut : nécessité d'un fil de liaison avec le stylet à des fins de synchronisation, et mauvaise immunité aux bruits.

On connaît enfin par le document EP-A-0 584 695 un dispositif conforme au préambule de la revendication 1.

La présente invention a pour objet de pallier ces inconvénients, et de proposer un dispositif de détermination de coordonnées x/y qui puisse être utilisé aussi bien avec un stylet à vibration axiale qu'avec des impacts d'un objet quelconque sur la plaque, qui soit peu sensibles au variations d'inclinaison du stylet lorsqu'un tel stylet est utilisé, qui puisse traiter une large variété de formes d'onde, d'amplitudes et de fréquences correspondant à des variétés de chocs susceptibles d'être produits, et qui enfin soit beaucoup moins sensible aux parasites acoustiques.

L'invention vise également à proposer un tel dispositif, qui présente une bonne précision, et une bonne résolution tant statique que dynamique.

Un autre objet encore de l'invention est de proposer un dispositif applicable à des plaques ordinaires de très grandes dimensions, telles que des vitrines, avec un coût extrêmement modeste.

Ainsi l'invention concerne un dispositif d'acquisition de coordonnées tel que défini dans la revendication 1.

Des aspects préférés, mais non limitatifs, de ce dispositif sont définis dans les revendications dépendantes.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :

la figure 1 est une vue schématique d'un dispositif de l'état de la technique,
la figure 2 est une vue de dessus schématique, limitée à la détection d'une seule coordonnée, d'un dispositif selon la présente invention,
la figure 3 est une vue en perspective de la partie mécanique d'un dispositif selon une forme de réalisation préférée de l'invention,
la figure 4 est un graphique illustrant les signaux recueillis dans deux types de dispositifs illustrés dans la partie droite de la figure,
la figure 5 est un graphique illustrant les signaux recueillis dans deux autres types de dispositifs illustrés dans la partie droite de la figure,
la figure 6 illustre les signaux obtenus lorsque l'on fait varier l'inclinaison, la position et la rotation du stylet dans un autre type encore de dispositif,
la figure 7 est une vue schématique en perspective d'un stylet selon une première forme de réalisation préférée de l'invention, et de la plaque associée,

la figure 8 illustre les signaux recueillis lorsque l'on fait tourner sur lui-même le stylet de la figure 7,

la figure 9 est une vue plus détaillée en perspective d'une partie du stylet de la figure 7 et d'un élément piézo-électrique individuel qu'il comporte,

la figure 10 est une vue en coupe verticale à travers une plaque pouvant être utilisée avec un autre type de stylet,

les figures 11a et 11b représentent des courbes des signaux recueillis avec deux types de dispositifs différents,

les figures 12a et 12b sont des vues respectivement en coupe axiale et en perspective éclatée d'une partie d'un stylet selon une deuxième forme de réalisation préférée de l'invention,

la figure 13 est une vue en perspective éclatée d'une partie d'un stylet selon une troisième forme de réalisation préférée de l'invention,

les figures 14a et 14b sont des vues partielles en perspective d'un stylet selon une quatrième forme de réalisation préférée de l'invention et d'une variante de celui-ci, respectivement,

la figure 15 est une vue détaillée en coupe axiale d'un stylet selon la première forme de réalisation préférée de l'invention,

la figure 16 illustre comparativement les signaux bruts produits par un récepteur respectivement avant et après les opérations d'élévation au carré et de double intégration,

la figure 17 est un schéma électronique d'un circuit de traitement du signal délivré par un récepteur de la plaque,

la figure 18 est un schéma-bloc de l'ensemble d'un dispositif selon l'invention, illustrant les circuits électroniques mis en jeu,

la figure 19 est un chronogramme illustrant un certain nombre de signaux circulant dans les circuits de la figure 18,

la figure 20 illustre dans le détail un circuit électronique faisant partie du circuit de la figure 18,

la figure 21 illustre le signal obtenu en ajoutant dans le circuit de traitement de la figure 18 un filtre passe-haut,

la figure 22 est un chronogramme illustrant l'élimination de certaines acquisitions de coordonnées grâce à des registres à décalage, dans le cadre de plaques de petites dimensions,

la figure 23 est une vue de dessus d'une plaque et d'un stylet selon l'invention, schématisant certains phénomènes de distortion,

la figure 24 est un schéma de principe d'un dispositif d'acquisition de coordonnées XY selon une autre forme de réalisation préférée de l'invention,

la figure 25 est une vue en perspective d'une plaque équipée de récepteurs et opérant selon le principe illustré sur la figure 24,

la figure 26a est une vue en coupe transversale d'un premier agencement de récepteurs d'une même paire,

la figure 26b est une vue en coupe transversale d'un second agencement de récepteurs d'une même paire,

la figure 27 est un schéma d'un circuit électronique de commande d'un stylet selon la présente invention,

la figure 28 est un schéma-bloc des circuits de traitement des signaux fournis par les récepteurs du dispositif de la figure 25 et d'interfaçage ave un calculateur, et

la figure 29 est un chronogramme illustrant l'allure d'un certain nombre de signaux circulant dans le circuit de la figure 28.

On notera préliminairement que, d'une figure à l'autre, des éléments ou parties identiques ou similaires sont désignés dans la mesure du possible par les mêmes signes de référence.

En référence maintenant à la figure 2, on a représenté une plaque P de forme rectangulaire, comportant sur ses deux bords parallèles opposés deux récepteurs Ra, Rb d'ondes acoustiques, par exemple de type piézo-électrique.

Le stylet S est muni d'un émetteur d'ondes acoustiques au niveau de sa pointe, et est capable d'émettre à intervalles réguliers des paquets d'ondes présentant un premier front temporellement bien défini. Le référentiel selon une droite perpendiculaire aux récepteurs Ra, Rb et passant par le point de contact C entre le stylet et la plaque est noté (0,i).

La coordonnée x du point C par rapport au point O est obtenue par l'équation suivante :

$$x_i = (\Delta T_a - \Delta T_b).V/2.i$$

où :

V est la vitesse de propagation des ondes acoustiques dans la plaque selon la direction $\pm i$;

$\Delta T_a$ est le temps de vol de l'onde entre son émission par le stylet au point C et sa réception par le récepteur Ra; et

$\Delta T_b$ est le temps de vol de l'onde entre son émission par le stylet au point C et sa réception par le récepteur Rb.

Il s'agit donc d'une mesure différentielle de la coordonnée x, qui a l'avantage d'éliminer toutes perturbations additives présentes dans le paquet d'ondes émis par la pointe du stylet.

La figure 3 illustre en perspective la plaque P équipée de deux récepteurs Rx+ et Rx- destinés à mesurer la coordonnée x du point de contact C, et de deux autres récepteurs Ry+ et Ry-, sur les deux autres bords opposés, destinés à mesurer la coordonnée y du point C.

La plaque P est réalisée en un matériau très rigide, par exemple en verre, afin, d'assurer une bonne propagation des ondes.

Le stylet S émet des impulsions au point C, et les quatre récepteurs enregistrent les instants d'arrivée de ces impulsions. Un circuit électronique (décrit plus loin) calcule la position du point de contact C et la transmet à un calculateur tel qu'un ordinateur personnel. Les coordonnées x,y du point C sont données par :

$$x = (Tx^- - Tx^+).V/2$$

$$y = (Ty^- - Ty^+).V/2$$

$Tx^-$, $Tx^+$, $Ty^-$ et $Ty^+$ représentant les instants auxquels les récepteurs reçoivent les paquets d'ondes, et V représentant la vitesse de propagation de ces ondes.

Le programme du calculateur enregistre les séries de coordonnées délivrées, détermine les anomalies et les ruptures de contact comme on le verra plus loin, et affiche le tracé T à l'écran ou sur une imprimante.

On notera que les ruptures de contact sont détectées lorsque les récepteurs ne reçoivent plus régulièrement les ondes acoustiques émises par le stylet, ces ondes étant transmises à la plaque seulement lorsqu'un contact durable existe.

Le calculateur peut être équipé, de façon classique en soi, d'un programme de reconnaissance de l'écriture.

Avec le mode de calcul ci-dessus, l'origine O du tracé se situe au centre de la plaque.

On observera ici qu'un avantage de la détection différentielle selon l'invention réside en ce que, pour une même résolution, la fréquence d'horloge utilisée pour quantifier la différence entre les temps de propagation dans les directions positive et négative doit être égale à la moitié seulement de la fréquence d'horloge devant être utilisée dans le cas de la mesure directe de la figure 1.

En outre, dans le cas d'une mesure temporelle par circuits numériques, on prévoit des compteurs de temps (comptant le nombre de périodes d'horloge correspondant à la différence de temps) dont le contenu (sur N bits) est complété par un bit de signe de la coordonnée concernée.

Par exemple, en considérant qu'une incrémentation du compteur d'une unité correspond à un déplacement de 0,1 mm, un compteur de 10 bits (plus un bit de signe) permet de gérer des déplacements dans une gamme de ± 10,24 cm.

Un autre avantage, essentiel, du dispositif de détection différentielle décrit ci-dessus réside en ce qu'il fonctionne de façon asynchrone. En d'autres termes, les circuits électroniques de détection n'ont pas besoin de la connaissance de l'instant auquel les ondes sont émises par le stylet.

En conséquence, dans la mesure où le stylet est équipé d'une source d'énergie, d'un générateur d'impulsions et du transducteur, celui-ci peut être dépourvu de câble de liaison.

On comprend que différents types de vibrations peuvent être impartis à la pointe du stylet pour engendrer une onde acoustique au point de contact. Essentiellement, on peut engendrer une onde selon l'axe du stylet, ou une onde selon une direction perpendiculaire à l'axe du stylet (se situant dans le plan de la plaque dans le cas où le stylet est rigoureusement vertical). En outre, différentes positions peuvent être choisies pour les récepteurs, et essentiellement une position dans laquelle, selon l'invention, ils sont fixés sur la surface de la plaque, et, de façon exclue de l'invention, une position dans laquelle ils sont fixés en bout de plaque (sur chant).

De façon connue en soi, les ondes appliquées à la plaque se propagent sous forme d'ondes "de plaque", ou ondes "de Lamb", selon deux modes à basse fréquence, à savoir un mode de Lamb symétrique noté S0 et un mode de Lamb antisymétrique noté A0, avec des vitesses de propagation différentes (la vitesse étant plus rapide pour le mode S0).

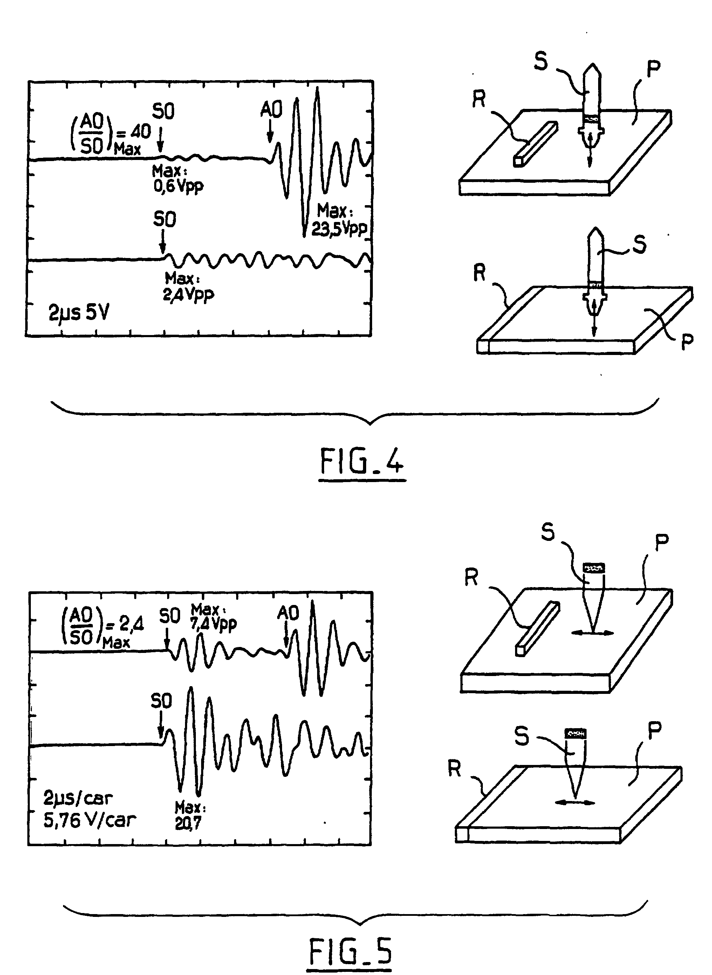

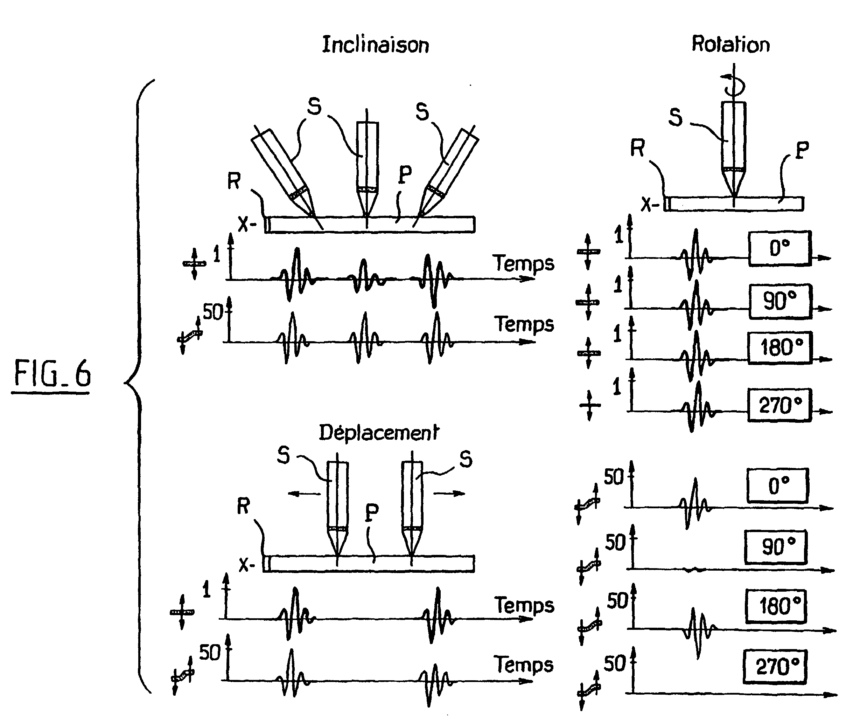

Les figures 4 et 5 illustrent les signaux recueillis par les récepteurs piézo-électriques dans les deux modes de propagation pour les deux modes de vibration. On observe que les ondes reçues sont tout d'abord les ondes du mode 50, suivies un instant après par les ondes du mode A0 du fait des différentes vitesses de propagation.

Ainsi la figure 4 illustre le cas d'une vibration axiale, avec un récepteur en surface selon l'invention (courbe du haut) et avec un récepteur sur chant hors de l'invention (courbe du bas).

De même, la figure 5 illustre le cas d'une vibration transversale à l'axe du stylet, et perpendiculaire au récepteur, avec un récepteur en surface selon l'invention (courbe du haut) et avec un récepteur sur chant hors de l'invention (courbe du bas).

La figure 6 montre, avec une vibration transversale du stylet, les signaux obtenus, de façon non couverte par l'invention, avec un récepteur monté sur chant lorsque l'on fait varier l'inclinaison du stylet et lorsque l'on translate le stylet parallèlement à la plaque.

On observe sur ces figures que l'amplitude des signaux obtenus dans les deux modes S0 et A0 dépend largement de la façon dont la pointe du stylet vibre, et dépend diversement des variations d'inclinaison ou de rotation sur lui-même du stylet.

Ainsi, avec un récepteur monté sur chant, une vibration axiale engendre principalement des ondes de Lamb dans le mode antisymétrique A0 (partie supérieure de la figure 4), tandis qu'une vibration transversale engendre des ondes de Lamb relativement équilibrées entre les deux modes S0 et A0 (figure 5).

En outre, une vibration axiale rend l'amplitude du signal insensible à sa rotation (partie supérieure des courbes situées à droite de la figure 6). Au contraire, une vibration transversale rend le stylet sensible à sa rotation dans ce même mode (partie inférieure des courbes situées à droite de la figure 6).

Compte-tenu des limitations ci-dessus, et notamment de l'impossibilité d'obtenir à la fois un signal de niveau important et insensible à la fois aux variations d'inclinaison et à la rotation, et ce quelle que soit la vibration du stylet (axiale ou transversale), de telles caractéristiques peuvent être obtenues si l'on utilise une vibration transversale (en cisaillement) engendrée dans deux directions perpendiculaires, en équipant le stylet de deux transducteurs à vibration transversale décalés angulairement de 90°. On obtient de cette manière une précession de la vibration autour de l'axe du stylet.

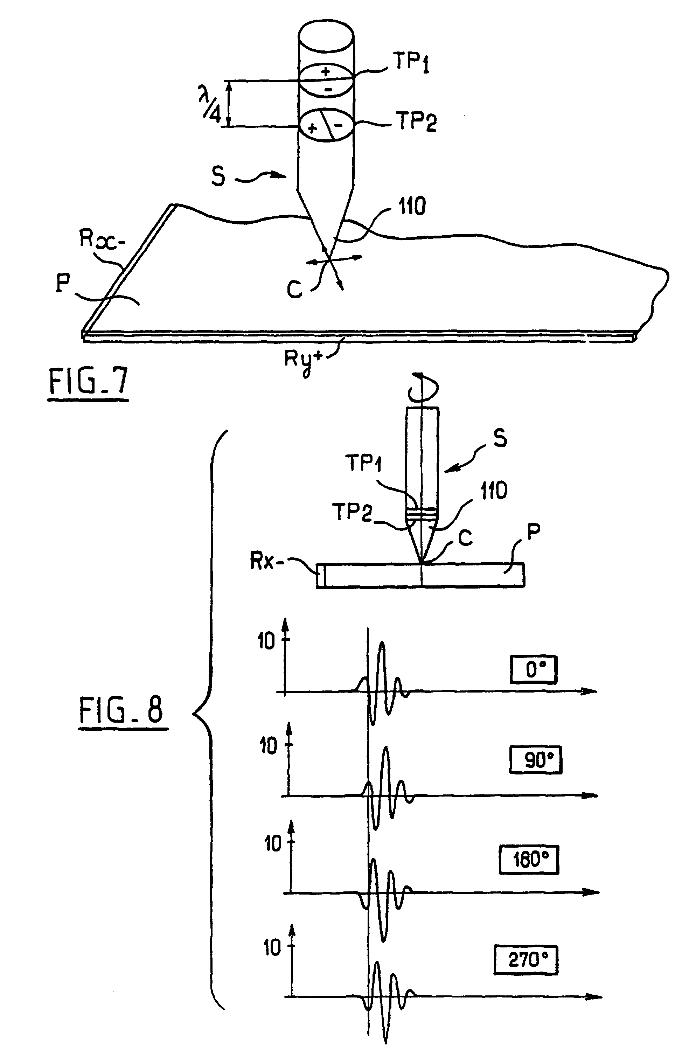

Un tel stylet est représenté schématiquement sur la figure 7. Il comprend un premier transducteur piézo-électrique TP1 et un second transducteur TP2 aptes à vibrer dans le domaine des ultrasons à même fréquence, décalés en hauteur d'un quart de la longueur d'onde $\lambda$ correspondant à la fréquence précitée, et décalés angulairement de 90°.

De cette manière, on obtient au niveau de la pointe 110 du stylet deux axes de vibration notés A1 et A2. De cette manière, une onde de forte amplitude est engendrée tout autour du stylet, ce qui rend le signal indépendant de la rotation du stylet. En outre on obtient une insensibilité à l'inclinaison du stylet.

La figure 8 montre les signaux recueillis pour quatre positions angulaires décalées de 90° l'une par rapport à l'autre, obtenues par rotation du stylet sur lui-même. On observe que les signaux ont tous la même amplitude.

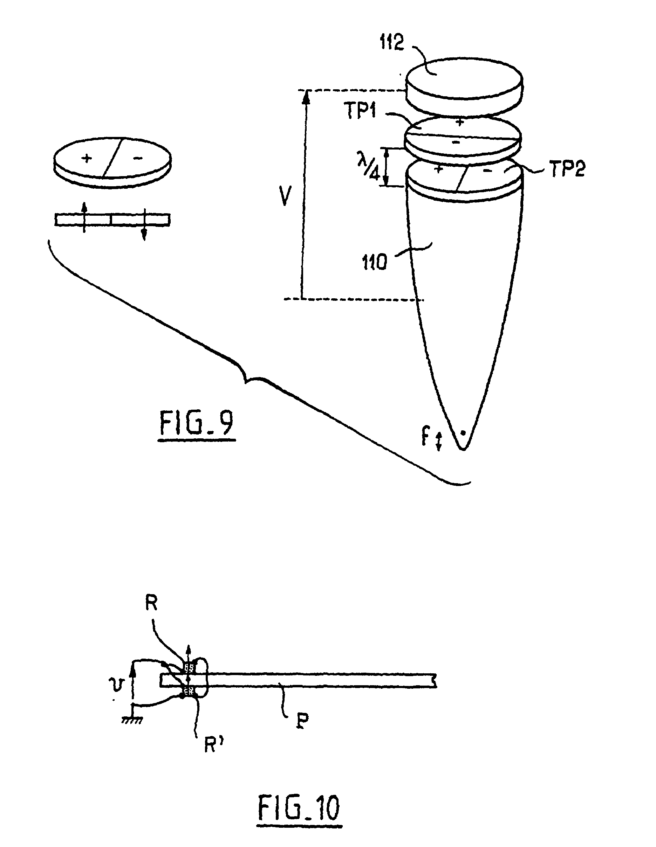

La figure 9 illustre plus en détail la construction du stylet.

Il comprend une pointe 110 soit conique, soit de préférence paraboloïdale, avec une focale f par exemple de l'ordre de quelques dixièmes de millimètre, réalisée par exemple en alliage d'aluminium, en verre ou en matière plastique dure telle que du "Plexiglass" (Marque Déposée). On rappellera ici que la focale f s'exprime par :

$$f = R^2/4h$$

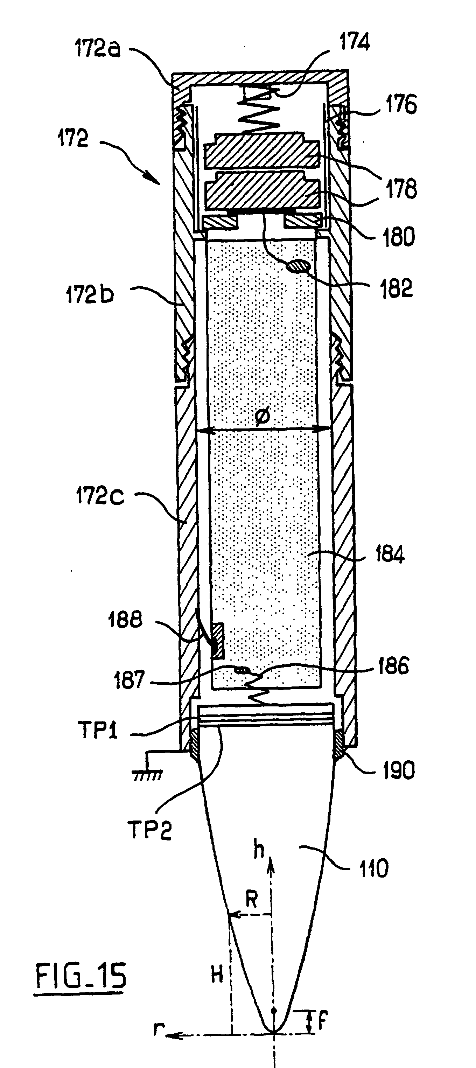

où $\underline{R}$ est le rayon local du paraboloïde à une hauteur $\underline{h}$ (voir aussi figure 15).

On observera ici que la forme paraboloidale de la pointe permet très avantageusement de conjuguer sur son foyer l'onde acoustique plane qui se propage dans la pointe essentiellement selon son axe, avec conservation des temps de parcours. On obtient par conséquent un signal acoustique amplifié et propre au très proche voisinage de l'extrémité de la pointe. A une certaine distance au-dessus de la surface supérieure circulaire plane de la pointe, il est prévu un disque en laiton 112 disposé de façon coaxiale.

Dans l'espace cylindrique existant entre le disque et la pointe sont disposés deux transducteurs piézo-électriques TP1, TP2 séparés de la distance 1/4 précitée. Ces deux transducteurs sont en outre décalés angulairement de 90°.

La partie gauche de la figure 9 montre que chaque transducteur comprend deux zones semi-circulaires adjacentes, de polarisations P inverses notées "+" et "-".

La pointe 110 est reliée à la masse, tandis que le disque supérieur 112 constitue une électrode d'excitation, des impulsions de tension V étant appliquées entre ladite électrode et la pointe.

On a vu plus haut que les stylets à vibration axiale rendaient les ondes acoustiques sensibles à l'inclinaison du stylet. Toutefois, ce problème peut être éliminé en concevant les récepteurs pour qu'ils puissent détecter les ondes dans le mode A0 engendrées par un vibrateur axial. Ainsi la figure 10 illustre une plaque P comportant le long de chacun de ses bords deux récepteurs R et R' situés respectivement au-dessus et au-dessous de la plaque. Les deux récepteurs ont un vecteur polarisation dirigé dans le même sens (disposition antisymétrique) et sont reliés symétriquement en parallèle, selon la configuration illustrée sur la figure 10. Du fait que l'onde dans le mode S0 est symétrique au regard de son vecteur normal, les signaux engendrés dans les deux récepteurs R et R' correspondant à ce mode vont s'annuler. Au contraire, les signaux dans le mode A0 étant non symétriques, ils vont se cumuler. Cette solution permet donc d'obtenir des signaux extrêmement propres correspondant au mode A0.

Comme on peut l'observer sur la figure 6, le mode A0 est toujours fortement engendré par une vibration ou par une percussion perpendiculaire à la surface de la plaque. Il est alors intéressant d'exploiter ce mode dans le cas où la plaque est de très grandes dimensions, typiquement de plus de 1 m$^2$ (par exemple une vitrine en verre d'un magasin), comme on va le voir en détail plus loin.

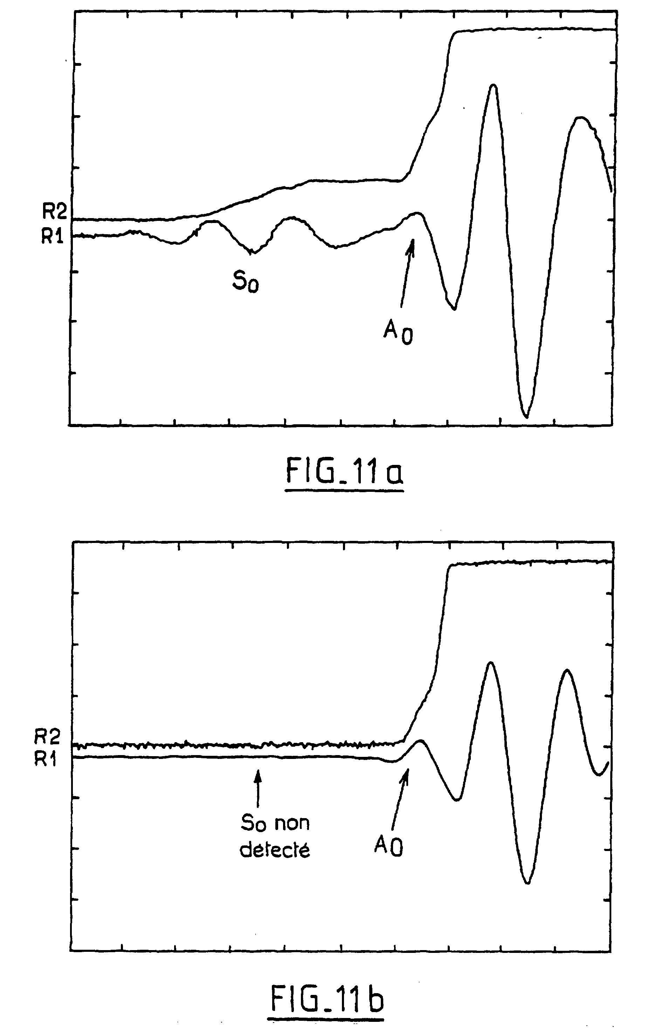

La figure 11a illustre les signaux obtenus dans le cas où l'on utilise un seul récepteur R sur la surface supérieure de la plaque, tandis que la figure 11b illustre les signaux obtenus avec la configuration de la figure 10.

Dans le cas de la figure 11a, les signaux correspondant au mode 50 présentent une amplitude substantielle. Dans le cas de la figure 11b, ont observe un début de tracé complètement plat, les deux signaux du mode S0 dans les deux récepteurs s'étant compensés mutuellement.

On va maintenant revenir sur des modes de réalisation, non couverts par l'invention, basés sur la détection du mode de Lamb S0, avec un stylet engendrant une vibration à précession. L'inconvénient essentiel de ce type de détection est une imprécision de la détection lors de la rotation du stylet sur lui-même, du fait des déphasages du paquet d'ondes provoqués par cette rotation (voir figure 8).

Selon un aspect de ces réalisations, ce problème peut être résolu en effectuant une élévation au carré des signaux reçus.

En variante, la conversion des signaux en valeur absolue, ou encore l'élévation à une puissance paire différente de deux pourrait également convenir.

En association avec cette caractéristique, on conçoit le stylet pour réaliser une précession de la vibration autour de l'axe du stylet, comme décrit succinctement plus haut.

On va décrire ci-dessous plusieurs modes de réalisation d'un stylet dans lequel une telle précession est créée.

Dans le cas du stylet décrit en référence à la figure 9, on obtient la précession en ajoutant au-dessus des deux transducteurs TP1 et TP2 un autre disque ayant la même impédance acoustique que ceux-ci.

De cette manière, on établit une fréquence de résonance de la source. La pointe en alliage d'aluminium, dont l'impédance acoustique est sensiblement plus basse, et dont la longueur selon l'axe est bien plus importante que le diamètre ou l'épaisseur cumulée des trois disques, n'a pratiquement aucune influence sur la fréquence de résonance des transducteurs.

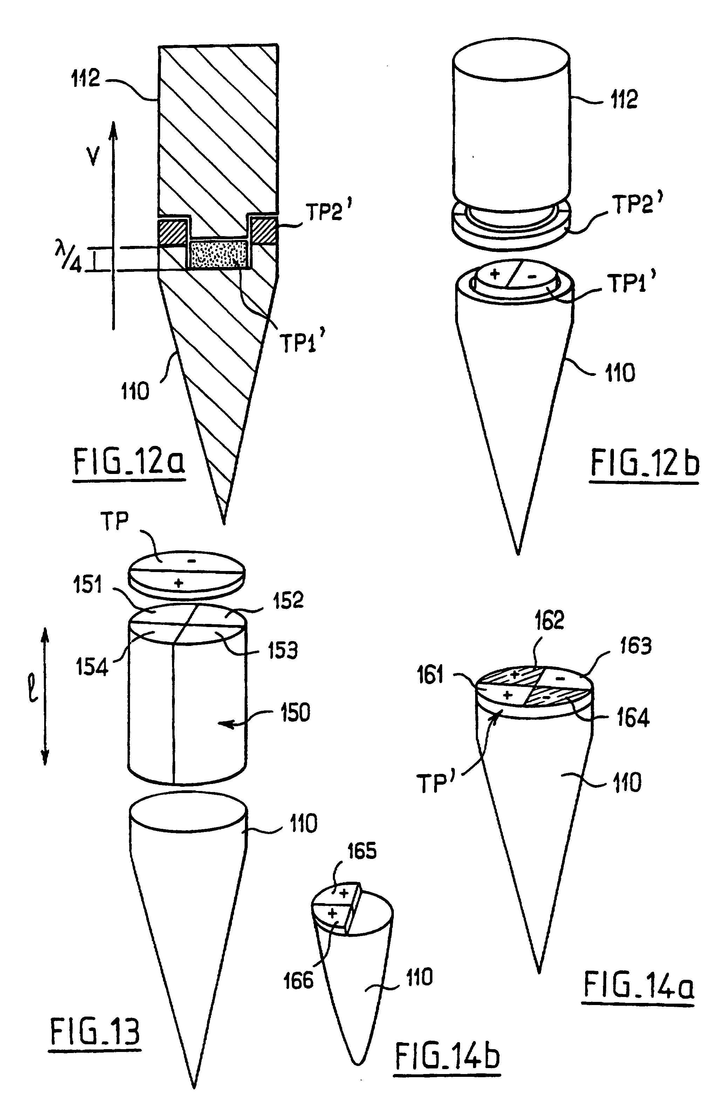

Un second mode de réalisation d'un stylet à précession est illustré sur les figures 12a et 12b. Il consiste à utiliser deux transducteurs composés d'un disque piézo-électrique TP1' et d'une bague piézo-électrique TP2' entourant le disque. Comme le montre bien la figure 12a, le disque et la bague sont décalés en hauteur d'une distance correspondant au quart de la longueur d'onde de la vibration. La pointe et l'électrode supérieure sont ici encore désignées par les références 110, 112, respectivement. Avec une telle réalisation, on assure une séparation des champs acoustiques engendrés par les deux transducteurs.

La seule difficulté rencontrée dans ce second mode de réalisation réside dans l'appariement des couples produits par le disque et par la bague. Supposons ici que le disque TP1' et la bague TP2' ont la même épaisseur. R désigne le rayon du disque, R1 le rayon intérieur de la bague et R2 le rayon extérieur de la bague. On peut démontrer que cet appariement est réalisé si les rayons précités satisfont approximativement à l'équation :

$$R2^3 = R1^3 + R^3$$

On a illustré sur la figure 13 une troisième forme de réalisation d'un stylet à précession.

Il comprend un disque piézo-électrique unique TP en forme de disque, à polarisation alternative comme dans les cas précédents (voir partie gauche de la figure 9). Au-dessous de l'élément TP est prévu un élément cylindrique 150 de longueur $\underline{l}$ séparé en quatre quarts selon deux plans axiaux perpendiculaires l'un à l'autre. Deux premiers quarts opposés 151, 153 sont réalisés en un matériau tel qu'un alliage d'aluminium, tandis que les deux autres quarts 152, 154 sont réalisés en verre.

L'un des plans axiaux de séparation des quatre quarts passe par la ligne diamétrale qui sépare les deux zones de polarisations inverses du transducteur.

Ce stylet comprend également une pointe 110 et une électrode supérieure cylindrique (non illustrée).

Lorsqu'un tel transducteur est excité, une onde ultrasonique est engendrée tant dans les parties en alliage d'aluminium que dans les parties en verre du cylindre 150.

Du fait qu'un alliage d'aluminium et un verre ont approximativement la même impédance acoustique, c'est à peu près la même quantité d'énergie qui traverse chaque quart du cylindre. Cependant, du fait que la vitesse de propagation des ultrasons est différente dans les deux matériaux, un déphasage apparaît sur la face inférieure du cylindre, une précession étant obtenue si ce déphasage est de 90°. Un déphasage de cette valeur est obtenu en ajustant la longueur $\underline{l}$ du cylindre, selon la loi ci-dessous :

$$\underline{l} = (T/4).(Vg.Vd)/(VG-Vd)$$

où :

Vd est la vitesse de propagation dans l'alliage,
Vg est la vitesse de propagation dans le verre,
T est la pseudo-période du paquet d'ondes.

Dans les trois modes de réalisation ci-dessus, un déphasage de 90° est obtenu en excitant le ou les éléments piézo-électriques simultanément avec une impulsion électrique unique.

On peut également engendrer un tel déphasage de façon électronique. Dans ce cas, on réalise un stylet tel que représenté sur l'une des figures 14a et 14b. Celui de la figure 14a comprend une pointe 110 en alliage d'aluminium et un élément piézo-électrique unique TP', en forme de disque séparé en quatre quadrants 161, 162, 163 et 164, deux quadrants adjacents 161, 162 ayant une polarisation positive et les deux autres quadrants 163, 164 ayant une polarisation négative, comme illustré. Dans ce cas, on applique une première impulsion de tension aux quadrants opposés 161, 163, puis une seconde impulsion de tension aux quadrants opposés 162, 164, cette seconde impulsion ayant par rapport à la première un retard égal au quart de la pseudo-période du paquet d'ondes.

Dans le cas de la figure 14b, il est prévu seulement un demi-disque dont les deux quadrants sont polarisés positivement. Le fonctionnement de ce stylet est identique à celui du stylet de la figure 14a, à ceci près que pour un même champ électrique d'excitation, l'amplitude de précession est moitié moins grande. L'avantage obtenu ici est qu'il n'est pas nécessaire de recourir à une polarisation alternée.

On observera ici que, dans tous les modes de réalisation proposés, l'amplitude de la vibration de la pointe est directement proportionnelle à la tension appliquée, et inversement proportionnelle à la fréquence de la vibration.

On a réalisé un stylet ayant les caractéristiques suivantes :

hauteur de la pointe 110 : 17,5 mm
Demi-angle au sommet de la pointe 110 : 11
Diamètre du disque piézo-électrique : 7 mm
Épaisseur du disque piézo-électrique : 0,2 mm
Diamètre du résonateur en laiton 112 : 7 mm
Épaisseur du résonateur en laiton 112 : 1 mm

Avec un tel stylet, pour une fréquence de vibration de 1 MHz, une impulsion électrique de 5 volts a produit une amplitude de vibration à la pointe de 200 Å.

La figure 15 illustre un mode de réalisation concret d'un stylet selon la présente invention.

Il comprend un boîtier métallique cylindrique borgne comportant deux parties cylindriques 172b, 172c fixées ensemble par vissage et un capot supérieur 172a vissé sur la partie 172b. Ce boîtier définit un logement intérieur d'un diamètre f par exemple de l'ordre de 9 mm.

L'espace intérieur du boîtier définit dans sa partie supérieure un logement pour deux piles de 1,5 volt 178, un ressort métallique assurant la connexion de la borne négative de la pile supérieure avec le boîtier et le maintien des piles en contact.

Une feuille isolante 176 entoure les piles latéralement pour éviter tout contact avec le boîtier. Un disque isolant 180 s'étend entre la pile inférieure et une nervure de calage formée à l'intérieur de la partie 172b du boîtier.

La partie inférieure du logement du boîtier reçoit une carte électronique sur laquelle est implanté un circuit générateur des impulsions destinées à exciter les transducteurs. Cette carte comporte une borne 182 d'alimentation avec la tension de 3 volts délivrée par les deux piles en série, une borne de sortie 187 pour les impulsions d'excitation, et une languette souple 188 de contact avec le boîtier, formant contact de masse.

Le stylet comprend également une pointe vibrante correspondant au mode de réalisation de la figure 9, composé d'une électrode supérieure 112 reliée par un conducteur élastique 186 à la borne de sortie 187, de deux transducteurs TP1, TP2 et de la pointe proprement-dite 110.

La référence 190 désigne un adhésif conducteur reliant la pointe 110 au boîtier 172 dans la région inférieure ouverte de celui-ci.

Le fait que le boîtier 172 soit à la masse permet d'éviter de rayonner des interférences électromagnétiques.

Le générateur d'impulsions est relié aux bornes des deux transducteurs piézo-électriques, qui sont équivalents à des charges capacitives d'une valeur de l'ordre de 1,2 nF (pour des valeurs er = 1250, diamètre = 7 mm et épaisseur = 0,4 mm).

Avec les consommations mesurées et des piles du commerce, le stylet réalisé comme décrit ci-dessus peut avoir une autonomie de l'ordre de 5000 heures selon le type de pile (par exemple 4700 heures avec deux piles de 1,5 volt d'une capacité de 70 mA.h).

On va maintenant décrire en détail le traitement des signaux ultrasoniques recueillis par les récepteurs de la plaque P.

Tout d'abord, un générateur d'horloge, par exemple d'une fréquence de l'ordre de 1 kHz, cadence le générateur d'impulsions du stylet, et détermine de ce fait la cadence de l'acquisition des données x/y. Ainsi, toutes les millisecondes, une impulsion électrique de quelques volts est appliquée aux transducteurs TP1 et TP2 du stylet S, et une onde acoustique est engendrée dans la plaque P au point de contact de la pointe du stylet.

Le paquet d'ondes qui se propage inclut les deux modes de Lamb A0 et S0.

Le mode symétrique S0, dont la vitesse de propagation est la plus grande, atteint les récepteurs en premier, Ces récepteurs (montés dans le cas d'espèce sur chant de façon non couverte en soi par l'invention), convertissent les signaux acoustiques reçus en signaux électriques, et sont équivalents chacun à une source de courant.

Cette source de courant est amplifiée et convertie en source de tension par un amplificateur à transimpédance.

Une première solution simple pour détecter l'instant d'arrivée d'un paquet d'ondes est de prendre en compte la valeur élevée au carré, du signal électrique correspondant au paquet d'ondes, de manière à obtenir une valeur moyenne strictement positive.

L'étage suivant du circuit de traitement est constitué par un intégrateur, qui délivre un signal présentant une pente descendante avec des paliers de pente nulle correspondant aux moments pendant lesquels le signal élevé au carré présente une valeur nulle.

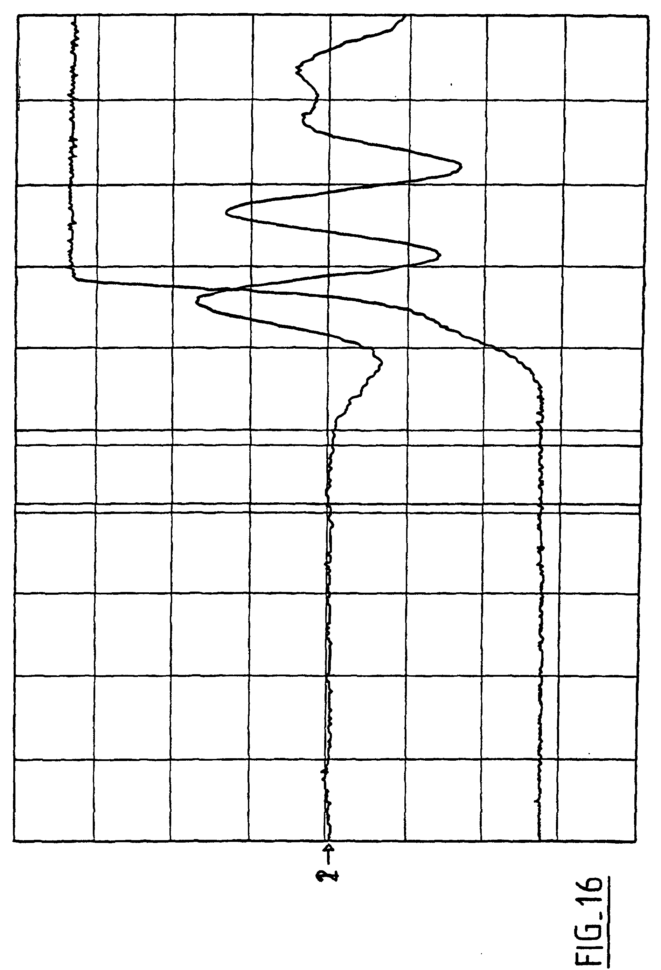

De tels paliers peuvent conduire à des mesures inexactes, et sont éliminés en recourant à une seconde intégration. La figure 16 illustre le front montant très raide obtenu après la double intégration, ainsi que le signal expérimental avant élévation au carré.

Afin de réduire au minimum toute erreur due à la diffraction, il est important de déterminer l'instant d'arrivée du paquet d'ondes aussi rapidement que possible après l'arrivée effective du paquet d'ondes sur le récepteur. La solution décrite ci-dessus, consistant à effectuer une élévation au carré suivie d'une double intégration, permet d'atteindre cet objectif. Plus particulièrement, la figure 16 montre que le front montant est produit très rapidement, et avant que le signal avant élévation au carré ne repasse par zéro une deuxième fois.

Le front montant illustré sur la figure 16, après ajustement éventuel sur une tension compatible avec la logique TTL, déclenche un monostable suiveur.

Chacun des quatre récépteurs piézo-électriques R1-R4 comporte un circuit de traitement tel que décrit ci-dessus, et les signaux logiques fournis par les quatre monostables déterminent, par les instants relatifs auxquels ils apparaissent, d'une part le signe de chacune des coordonnées et d'autre part la différence de temps de propagation du paquet d'onde vers les deux paires de récepteurs opposés.

Par exemple, un niveau logique haut (+5 volts) signifie un signe négatif, et un niveau logique bas (0 volt) un signe positif.

Comme on le verra en détail plus loin, le signal de signe pour chaque coordonnée commande un commutateur analogique qui donne à la valeur analogique de la coordonnée le signe voulu.

Les sorties des deux monostables correspondant à une même coordonnée (par exemple x+ et x-) sont combinées dans une porte OU, qui délivre une impulsion de sortie dont la largeur est proportionnelle à la valeur de la coordonnée.

Ainsi, si l'on désigne :

par $t_0$ l'instant d'arrivée du signal sur le récepteur le plus proche,
par $t_1$ l'instant d'arrivée du signal sur le récepteur le plus éloigné,
par Vp la vitesse du paquet d'ondes dans le mode S0, et
par T la période d'une horloge à haute fréquence cadençant le système,

alors la valeur de la coordonnée x est donnée par l'équation suivante :

$$2x = (t_1 - t_0).Vp = N.T.Vp = N.T.(2Dx_{min}/T) = 2N.Dx_{min}$$

soit :

$$x = N.Dx_{min}$$

En choisissant pour T une valeur égale à la durée de propagation du paquet d'ondes sur une longueur de 0,2 mm (et en l'espèce, T = 37 ns pour une vitesse Vp = 5390 m/s), on obtient que la valeur de la coordonnée est égale à N unités de 0,1 mm chacune.

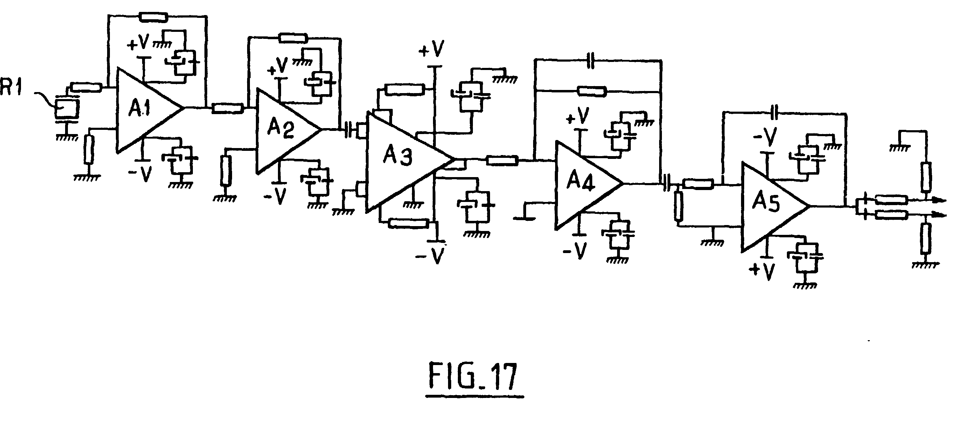

On a représenté sur la figure 17 un exemple de réalisation d'un circuit de traitement incluant un étage formant amplificateur à transimpédance construit autour de deux amplificateurs opérationnels A1 et A2, un étage d'élévation au carré construit autour d'un amplificateur opérationnel A3, un premier étage d'intégration construit autour d'un amplificateur opérationnel A4 et un second étage d'intégration construit autour d'un amplificateur opérationnel A5.

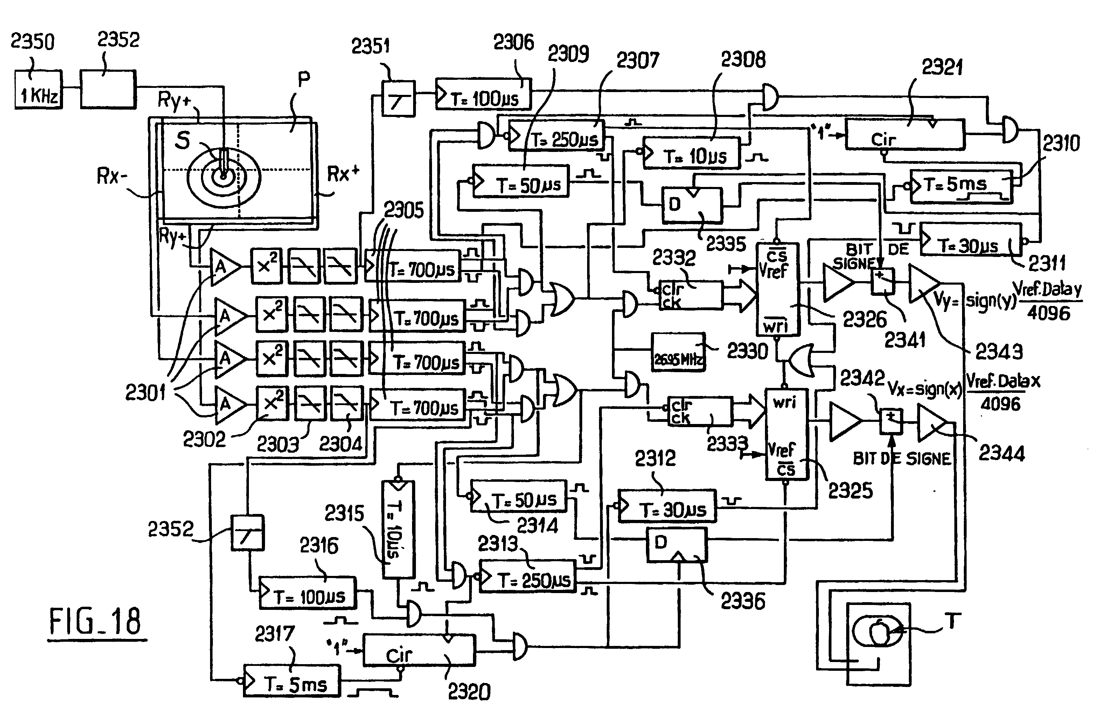

La figure 18 est un schéma-bloc de l'ensemble d'un dispositif de mesure de coordonnées x/y selon l'invention.

La référence 2350 désigne l'horloge de 1kHz et la référence 2352 désigne le générateur d'impulsions, tous deux incorporés au stylet S.

On a également illustré la plaque P pourvue de ses quatres récepteurs piézo-électriques Rx+, Rx-, Ry+ et Ry- montés sur chant de façon non couverte en soi par l'invention.

Dans le présent exemple, on a utilisé une plaque en verre commercialisé sous la référence B270 par la société EDIVER, d'une taille de 71 x 71 x 1 mm. Les récepteurs sont constitués par des barres céramiques piézo-électriques d'une taille de 70 x 1 x 1,05 mm, polarisées en épaisseur, et dont les électrodes se situent sur les faces parallèles aux chants de la plaque.

Les signaux de sortie des récepteurs attaquent un groupe de quatre circuits de traitement des signaux comprenant chacun, comme décrit en détail plus haut, un amplificateur à transimpédance 2301, un étage d'élévation au carré 2302, un premier étage d'intégration 2303 et un second étage d'intégration 2304.

Ces circuits attaquent le circuit numérique de détermination des valeurs de x et de y par quatre monostables 2305 tels qu'évoqués plus haut.

Les références 2306 à 2316 désignent d'autres monostables, dont les durées sont indiquées à chaque fois en _s. Les circuits 2320 et 2321 sont des registres à décalage sur 8 bits. Les circuits 2325 et 2326 désignent des convertisseurs numérique/analogique sur 12 bits. Le circuit 2330 désigne une horloge à haute fréquence (par exemple 27 MHz) qui cadence l'ensemble des circuits logiques. Les circuits 2332 et 2333 désignent des compteurs sur 12 bits. Enfin les circuits 2335 et 2336 désignent des bascules de type "D".

L'étage de sortie de ce circuit est constitué par des commutateurs analogiques 2341, 2342 commandés par les bits de signe pour x et y, respectivement, attaquant des amplificateurs de sortie 2343, 2344 qui délivrent les mesures de x et y sous forme analogique, pour restituer un tracé T.

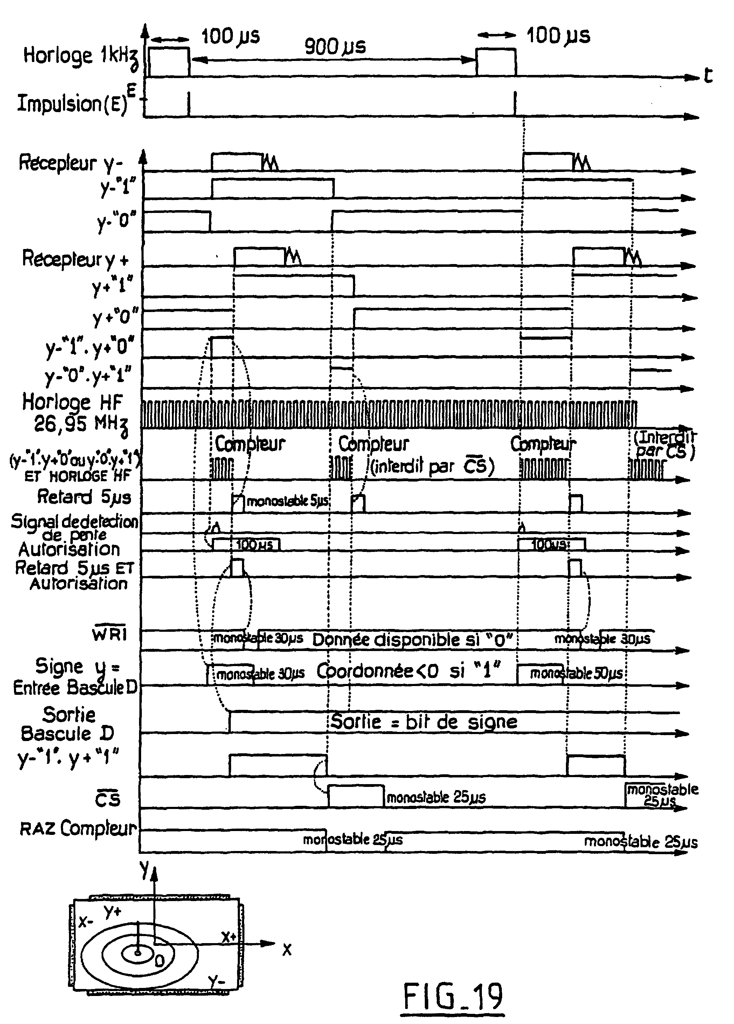

La figure 19 est un chronogramme illustrant les principales étapes de l'acquisition des coordonnées x et y à l'aide du circuit de la figure 18, pour la seule coordonnée y.

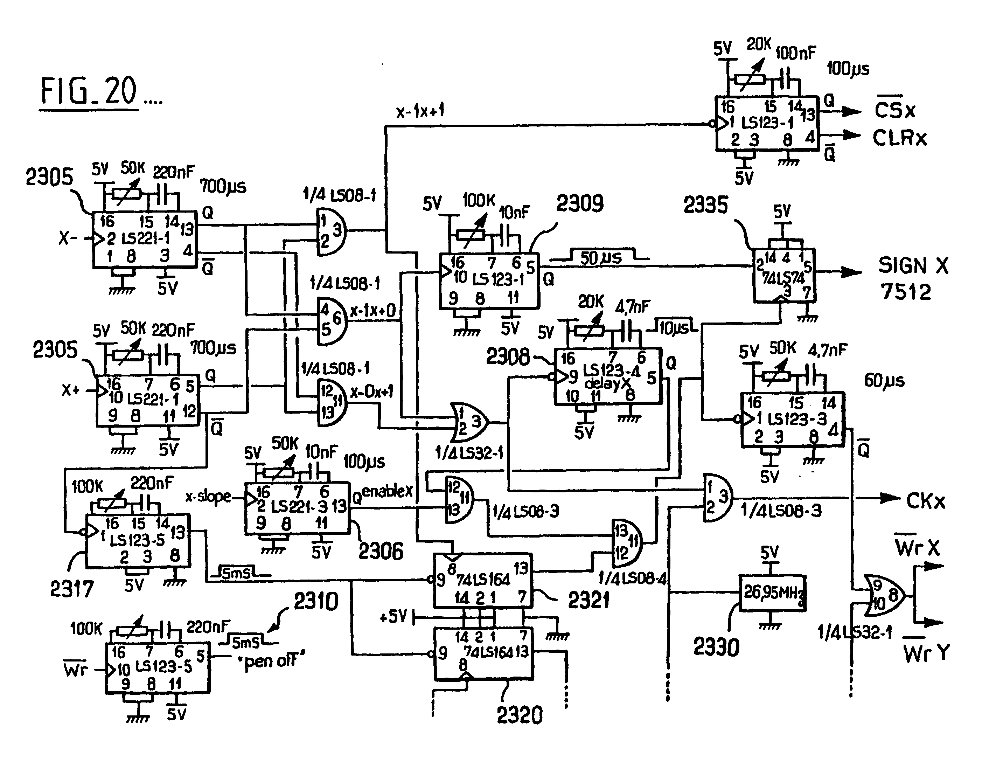

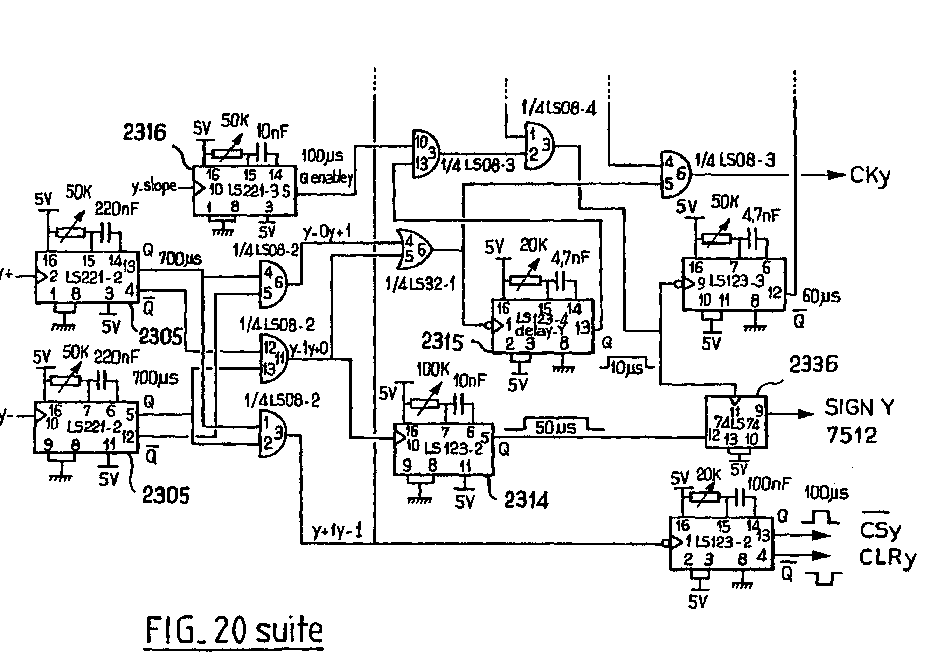

La figure 20 représente dans le détail une partie du circuit logique de traitement des valeurs numériques de coordonnées x et y, de leurs signes et de commandes d'écriture. Ce circuit reçoit en entrée, sur les monostables 2305, les sorties des seconds étages d'intégration 2304 (signaux $x^-$, $x^+$, $y^-$ et $y^+$).

Ce circuit comporte également une sortie d'un bit "PEN OFF" désignée par 2310 signifiant que le stylet n'est pas en contact avec la plaque.

Ce bit "PEN OFF" passe à l'état logique "0" à chaque fois que le stylet a été hors de contact avec la plaque pendant plus de 5 ms après le dernier contact, et repasse à l'état logique "1" lors de la première acquisition suivante, en étant maintenu à cette valeur par les transitions du signal "WR" (voir ci-dessous). Ce bit est utilisé pour connaître le nombre de segments constituant un mot, c'est-à-dire le nombre de couples (x,y) entre deux levers de stylet successifs.

Le bit "WR" passe au niveau logique "0" à chaque fois qu'un couple de coordonnées (x,y) a été acquis.

Une autre fonction importante du circuit logique de la figure 20 est d'éliminer les huit premières acquisitions de chaque trait (segment), ceci étant réalisé grâce aux registres à décalage sur huit bits 2320 et 2321. Les sorties de ces registres restent à "0" aussi longtemps que l'on a pas effectué huit acquisitions. Et le bit "WR" reste au niveau logique "1" tant que la sortie de ces registres est à "0".

Les valeurs absolues de x et de y sont établies par les compteurs sur douze bits 2332 et 2333 (figure 18). Le nombre de bits nécessaire pour chaque compteur varie bien entendu en fonction de la taille de la plaque et de la résolution souhaitée. Dans un exemple de réalisation, la valeur absolue de chaque coordonnée est codée sur 10 bits, et complétée par un bit de signe. En ajoutant le bit "PEN OFF" et le bit "WR", c'est un total de 24 bits, soit trois octets, qui est délivré par le dispositif à chaque acquisition.

On va maintenant décrire des moyens permettant d'éliminer de l'acquisition des ondes acoustiques parasites engendrées dans la plaque P. Ces ondes peuvent être issues par exemple d'un choc d'un bracelet-montre ou d'une bague de l'utilisateur contre la plaque, ou de la chute d'un objet dur sur la plaque.

Des études sur ce type de chocs ont permis de constater qu'il s'agit dans ce cas de signaux acoustiques ayant un contenu spectral plutôt centré sur les basses fréquences (±100 kHz), alors que la fréquence centrale du disque céramique TP du stylet est d'environ 1 MHz.

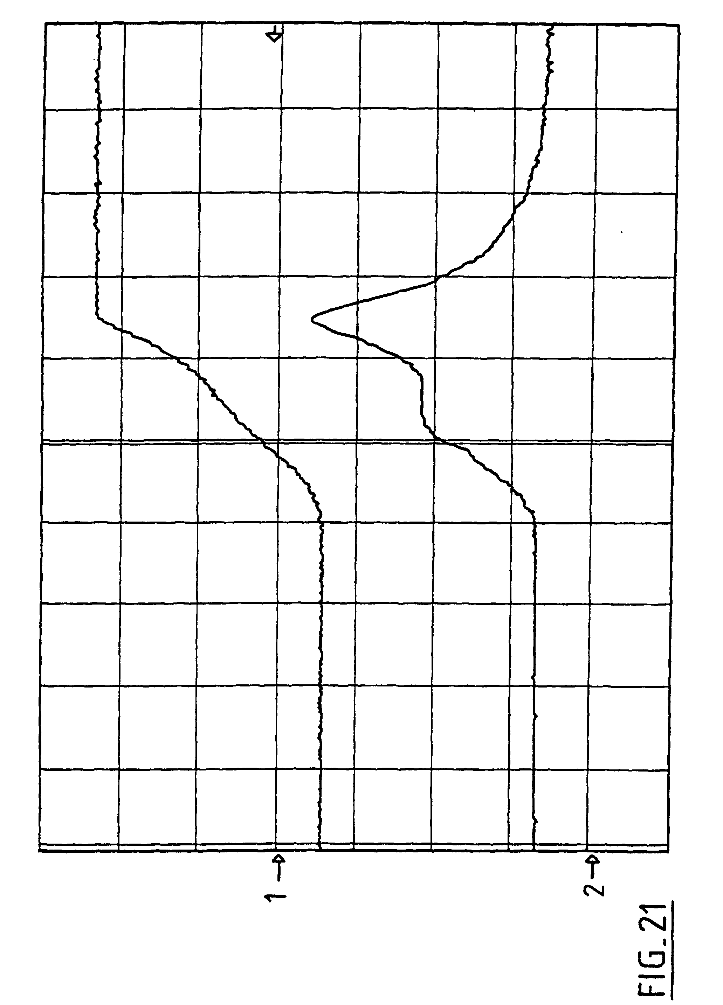

Une première solution pour éliminer ces ondes parasites consiste à recourir à un filtre passe-haut à la sortie du second étage d'intégration 2304. Ces filtres passe-haut pour les canaux x et y sont indiqués en 2351 et 2352 sur la figure 21. L'amplitude du signal à la sortie de ce filtre est proportionnel à la pente moyenne de la tension transitoire engendrée par le second intégrateur. Du fait que les chocs parasites ont des fréquences relativement basses, ils ont peu de risque de donner lieu à un signal dont l'amplitude soit suffisante pour franchir le seuil pour lequel un signal TTL passe du niveau bas au niveau haut (typiquement de l'ordre de 1,5 à 2 volts).

A cet égard, la partie supérieure de la figure 21 montre l'allure d'un signal typiquement obtenu à la sortie du filtre passe-haut lorsqu'un paquet d'ondes a été appliqué par le stylet à la plaque.

Un moyen pour éliminer les problèmes de chocs parasites est d'utiliser les deux registres à décalage sur huit bits 2320 et 2321 (comme décrit plus haut en référence à la figure 18), l'un pour les coordonnées x et l'autre pour les coordonnées y, et de faire en sorte que ces registres éliminent les huit "premières" mesures (x,y) de la manière suivante : à chaque fois que le stylet est relevé pendant plus de 5 ms, alors les acquisitions suivantes seront des "premières" acquisitions. En pratique, le contact du stylet avec la plaque cesse dès qu'une lettre un chiffre ou un symbole a été achevé. Donc, si la période de temps qui sépare deux mesures consécutives dépasse 5 ms, alors les registres à décalage sur huit bits sont remis à zéro au bout de cette durée, et les huit premières acquisitions immédiatement suivantes ne seront pas prises en compte. On notera ici que, pour un cadencement des acquisitions à 1 kHz, la durée de non-prise en compte est donc de 8 ms.

Si maintenant l'utilisateur écrit la lettre "i" (minuscule), on peut supposer que la durée nécessaire pour l'écriture du point sur le "i" est supérieure à 8 ms. Ce point sur le "i" sera donc bien pris en compte et apparaîtra dans le tracé.

L'intérêt principal de l'utilisation de ces deux registres à décalage est le suivant : à chaque fois que le stylet est mis en contact avec la plaque, il se produit une onde de choc parasite qui pourrait bien "traverser" le filtre passe-haut. Cependant, du fait qu'une telle onde de choc s'évanouit relativement rapidement (environ en 5 ms pour une plaque de verre de 1 mm d'épaisseur et ayant une taille de 71 x 71 mm), il en résulte que les registres à décalage sur huit bit jouent le rôle de filtre supplémentaires vis-à-vis des ondes de choc parasites. Ainsi, aussi longtemps que les sorties des registres à décalage pour la coordonnée x ou y restent à zéro, aucun signal "WR" ne sera produit et les coordonnées acquises ne seront pas prises en compte.

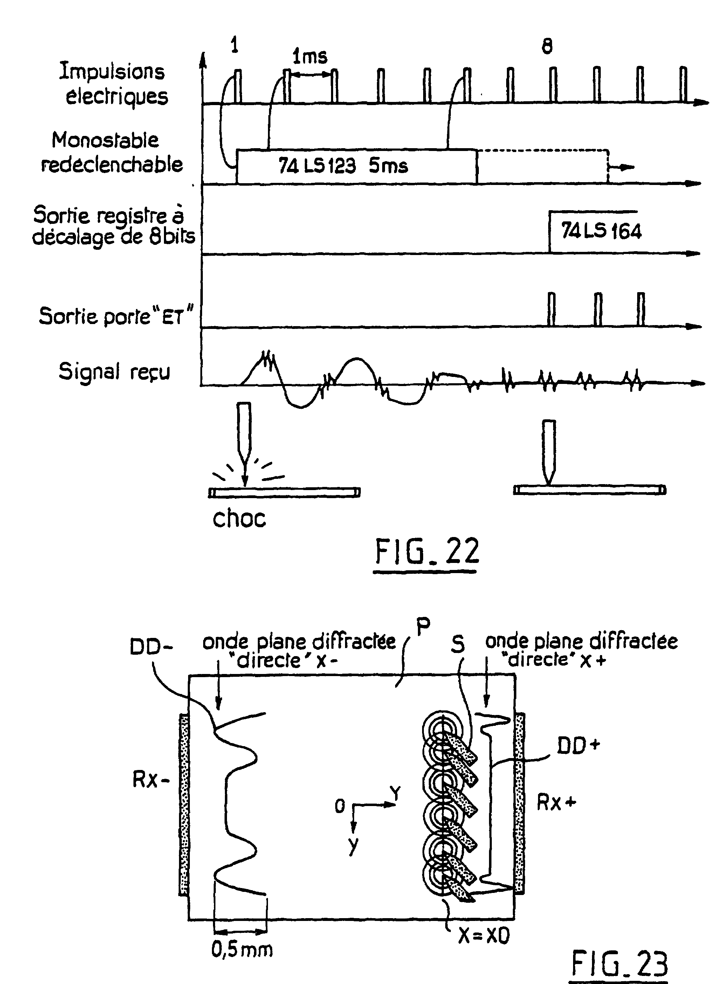

La figure 22 illustre le phénomène ci-dessus par un chronogramme des événements lors de l'apparition d'une onde acoustique parasite due à un choc.

On va maintenant décrire en détail les caractéristiques de la présente invention en matière de résolution et de précision.

La résolution de la mesure peut être définie comme le plus petit déplacement du stylet ($\partial x$, $\partial y$) pouvant être détecté par le dispositif. Il est donc clair que la résolution est liée au pas de quantification des compteurs pour x et pour y, et plus précisément au produit de la vitesse de propagation des ondes et de la période de l'horloge à haute fréquence qui cadence les compteurs.

En supposant que la période d'horloge Tck est de 37 ns, que la vitesse de propagation dans le mode de Lamb S0 est de 5390 m/s et que la vitesse de propagation dans le mode de Lamb A0 est de 3200 m/s, on obtient :

$$\partial x = \partial y = V.Tck/2 = 0,1 \text{ mm (pour S0) et } 0,06 \text{ mm (pour A0)}$$

La précision du dispositif peut être définie comme la différence $\Delta x$ (ou $\Delta y$) entre la position réelle et la position effectivement mesurée.

On a déterminé que les pertes de précision résultaient principalement des effets de diffraction. L'incertitude causée par ce phénomène a pu être évaluée à environ $\pm 0,25$ mm pour une fréquence de 1 MHz et pour une distance entre émetteur et récepteur de 100 mm.

On observera ici que la détection différentielle utilisée selon la présente invention réduit les effets de diffraction dans la région centrale de la plaque.

Au sujet de la résolution dynamique du dispositif, il faut observer de façon préliminaire qu'avec un dispositif selon la présente invention, les coordonnées x et y sont mesurées simultanément, alors que dans l'art antérieur, les coordonnées x et y sont généralement mesurées séquentiellement.

Aussi c'est la cadence des impulsions émises par le stylet qui détermine la cadence de l'acquisition des coordonnées.

Si la vitesse du stylet sur la plaque est de 10 cm/s, et si la cadence des acquisitions est de 1000 par seconde, alors la distance entre deux acquisitions consécutives est de 0,1 mm.

Pour diminuer cette distance, on pourrait accroître la cadence des acquisitions, mais ceci nécessite de disposer sur la plaque et dans le stylet des moyens d'atténuation acoustique. En effet, la cadence limite est déterminée par l'effet du bruit acoustique résiduel de la (n-1)ième mesure sur la nième mesure. Ainsi, avec une cadence d'acquisition de 1 kHz, le bruit résiduel est déjà sensible. Et plus grande est la plaque P, plus longue est la durée nécessaire à l'atténuation d'un paquet d'ondes appliqué, car cette atténuation se produit principalement lors des réflexions du paquet d'onde sur les bords de la plaque.

En conclusion, l'invention propose un dispositif de mesure de coordonnées opérant de façon différentielle, asynchrone et simultanée pour x et pour y, avec lequel le stylet peut être dépourvu de cordon.

Par ailleurs, l'invention propose des moyens pour s'affranchir des problèmes d'inclinaison du stylet et de rotation du stylet sur lui-même, et dans une certaine mesure des problèmes de diffraction.

De plus, comme on l'a vu, on peut utiliser l'un ou l'autre des deux modes de propagation S0 et A0.

Avec le mode A0 selon la présente invention, la pointe du stylet doit vibrer axialement, et chaque bord de la plaque comporte deux récepteurs piézo-électriques fixées au-dessus et au-dessous de la plaque, afin d'éliminer le mode S0 perturbateur, qui se propage à vitesse plus grande.

Avec le mode S0 de façon non couverte par l'invention, la pointe du stylet vibre avec précession. Un récepteur est monté sur le chant de chaque bord de la plaque. Ces récepteurs détectent en premier le mode S0, qui se propage à la vitesse la plus élevée, et le mode A0 est non perturbateur.

Comme on l'a vu également, la résolution peut être de 0,1 mm avec le mode S0, et de 0,06 mm avec le mode A0 (pour une horloge de comptage de 27 MHz).

Grâce à l'emploi d'une élévation au carré suivie d'une double intégration, une détection précise des paquets d'ondes émis par le stylet en mouvement est garantie. En outre, les circuits mis en jeu permettent de s'affranchir convenablement des problèmes d'inexactitude de mesure dus à des ondes de choc parasites sur la plaque ou à une baisse d'amplitude des ondes acoustiques lorsque le stylet heurte la plaque ou quitte celle-ci.

Les autres anomalies de mesure peuvent être éliminées par logiciel, grâce aux bits "WR" et "PEN OFF".

Par ailleurs, la détermination de la pente du signal en sortie de la double intégration permet d'obtenir une mesure de la pression du stylet contre la plaque.

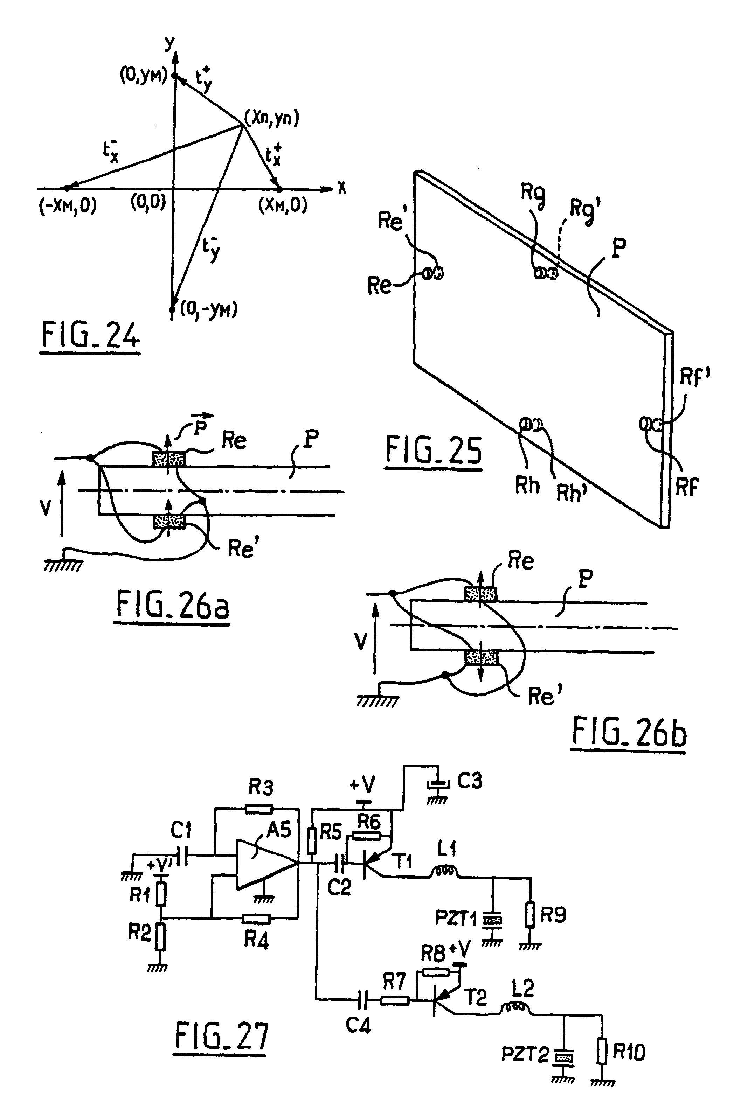

Maintenant en référence aux figures 24 et 25, on a représenté un autre dispositif préféré d'acquisition de coordonnées XY selon l'invention.

Comme on l'a évoqué plus haut, le mode de propagation A0 est toujours engendré avec une amplitude importante lors d'une vibration ou d'une percussion par le stylet perpendiculairement à la surface de la plaque P.

Cette forme de réalisation de l'invention vise à exploiter ce mode dans le *cas* de plaques de grandes dimensions, notamment supérieures à 1 m$^2$, telles que des vitrines de magasins ou analogues.

Les récepteurs sont ici constitués par quatre paires de petits disques de céramique piézo-électrique, respectivement Re, Re', Rf, Rf', Rg, Rg' et Rh, Rh'. Le diamètre de ces disques est de préférence choisi de telle sorte que le produit de la fréquence de résonance radiale de ces disques par l'épaisseur de la plaque soit de l'ordre du MHz.mm. A titre d'exemple, on peut choisir des disques de 16 mm de diamètre et d'une épaisseur de 1 mm, résonant radialement à 135 kHz, avec une plaque de verre d'une épaisseur de 8 mm.

Les paires de récepteurs sont disposées aux sommets d'un losange. Elles peuvent être situées à proximité des bords de la plaque mais également à distance de ces bords, par exemple pour définir pour une partie seulement d'une vitrine, s'étendant généralement entre les récepteurs, une zone d'acquisition de coordonnées XY.

Avec cette configuration, le calcul des coordonnées x et y d'un point de la plaque s'effectue encore par voie différentielle, mais avec des équations différentes du cas où les récepteurs sont allongés comme dans les figures précédentes.

Ces équations sont les suivantes :

$$\Delta t_x = t_x^- - t_x^+$$

$$\Delta t_y = t_y^- - t_y^+$$

$$x_0 = \frac{1}{2}\sqrt{\left(\frac{4x_M^2 - \Delta t_x^2 v^2 + \Delta t_y^2 v^2}{\dfrac{4x_M^2 - \Delta t_x^2 v^2}{\Delta t_x^2 v^2} - \dfrac{\Delta t_y^2 v^2}{4y_M^2 - \Delta t_y^2 v^2}}\right)}$$

$$y_0 = \frac{1}{2}\sqrt{\dfrac{4y_M^2 - \Delta t_y^2 v^2 + \Delta t_x^2 v^2}{\dfrac{4y_M^2 - \Delta t_y^2 v^2}{\Delta t_y^2 v^2} - \cdot \dfrac{\Delta t_x^2 v^2}{4x_M^2 - \Delta t_x^2 v^2}}}$$

où

+$x_M$ et -$x_M$ désignent les positions des paires de récepteurs Re, Re' et Rf, Rf', respectivement, sur l'axe xOx,

+$y_M$ et -$y_M$ désignent les positions des paires de récepteurs Rg, Rg' et Rf, Rf', respectivement, sur l'axe yOy,

$x_0$ et $y_0$ désignent les coordonnées dans le repère xOy du point d'impact sur la plaque,

$\Delta t_x$ désigne la différence entre les temps de parcours de l'onde du point d'impact vers les récepteurs Re, Re' et Rf, Rf', respectivement, ces temps de parcours étant notés $t_{x-}$ et $t_{x+}$,

$\Delta t_y$ désigne la différence entre les temps de parcours de l'onde du point d'impact vers les récepteurs Rg, Rg' et Rh, Rh', respectivement, ces temps de parcours étant notés $t_{y+}$ et $t_{y-}$, et

v désigne la vitesse de propagation des ondes dans la plaque.

Dans cette forme de réalisation, et de façon analogue à la figure 10, les disques sont fixés, par exemple par collage, en vis-à-vis sur les deux faces de la plaque, de manière à exploiter de façon optimale le mode de propagation A0, en éliminant le mode perturbateur S0. La figure 26a illustre le cas où deux disques, Re, Re', sont fixés de manière à ce que leurs vecteurs polarisation soient antisymétriques et connectés électriquement en parallèle de manière symétrique. Au contraire, dans la variante de la figure 26b, les disques sont montés avec des vecteurs polarisation symétriques et reliés électriquement en parallèle de façon antisymétrique. Ces deux possibilités s'appliquent naturellement aux quatre paires de disques récepteurs.

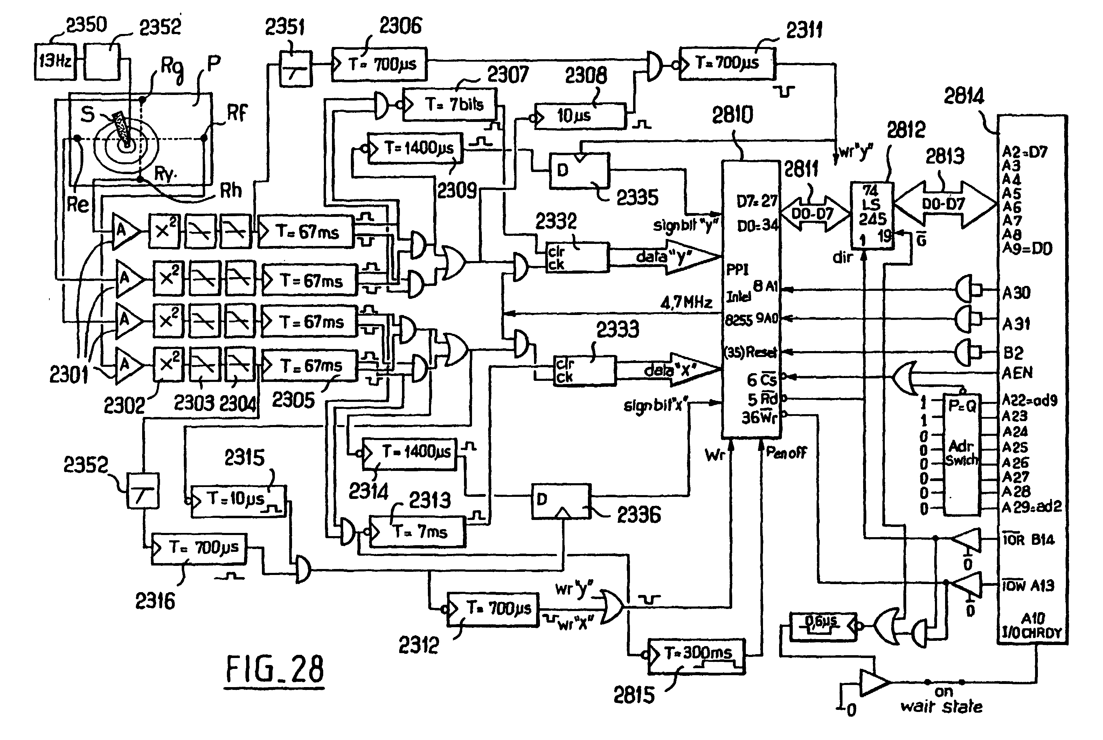

La figure 28 est un schéma-bloc d'un circuit de traitement des signaux fournis par les paires de récepteurs et d'interfaçage avec un calculateur tel qu'un micro-ordinateur. Les éléments identiques ou similaires à ceux de la figure 18 sont désignés par les mêmes signes de référence.

Par rapport au circuit de la figure 18, les différences essentielles sont l'absence des registres à décalage 2320 et 2321 destinés sur la figure 18 à éliminer les premières acquisitions de coordonnées. En effet, le dispositif des figures 24 à 26 est plus particulièrement destiné à opérer sans stylet, de manière à détecter les coordonnées des impacts exercés par une personne directement sur la plaque (cas notamment d'une vitrine) à l'aide d'un objet suffisamment dur (ongle, bague, clé, pièce de monnaie, pointe d'un stylo, etc...), ces impacts ayant une durée très brève et devant être pris en compte sans délai superflu.

Le circuit de la figure 28 comporte également un port d'entrées/sorties parallèles relié à la sortie des compteurs 2332 et 2333 et constitué en l'espèce par un circuit périphérique programmable désigné par la référence 2810, par exemple le modèle 8255 commercialisé par la société INTEL. Ce circuit est relié à un tampon 2812 via un bus de données 2811. Un autre bus de données 2813 relie ce tampon à un bus normalisé d'ordinateur de type PC, désigné dans son ensemble par la référence 2814. Le circuit de la figure 28 comporte en outre un circuit de temporisation 2815 recevant le même signal d'entrée que le circuit 2313 et dont la sortie est reliée à l'entrée "Pen off" du circuit périphérique 2810.

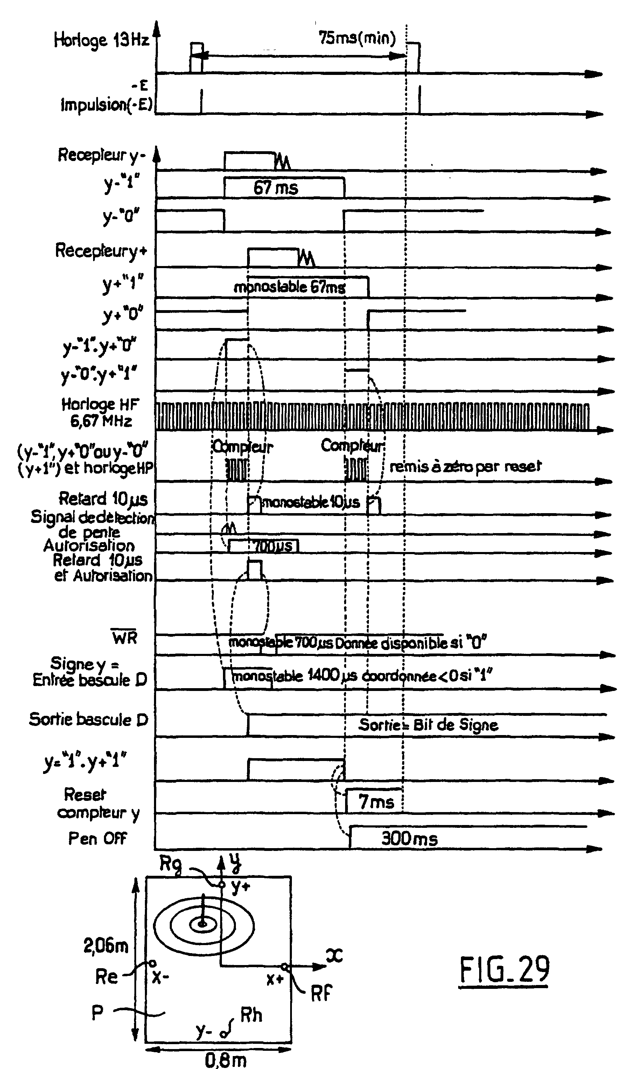

La figure 29 représente l'alllure des différents signaux identifiés sur la figure 28.

Dans le cas d'une application d'acquisition de coordonnées sur une vitrine, il est nécessaire, du fait de l'épaisseur importante de la plaque constituée par la vitrine elle-même, de recourir à des sources de vibrations ou d'impacts à basse fréquence pour minimiser la dispersion de l'énergie mécanique qui se propage. I1 faut par ailleurs que la fréquence de la source soit suffisamment élevée pour que les moyens de traitement puissent effectuer une discrimination par rapport à des bruits parasites de forte amplitude et de basse fréquence, engendrés par les moteurs et avertisseurs sonores de véhicules, les marteaux-piqueurs, etc... Compte-tenu de ces exigences contradictoires, un travail sur des fréquences comprises entre environ 100 et 200 kHZ s'avère approprié pour une plaque de 5 à 10 mm d'épaisseur et de plusieurs mètres carrés de surface.

A cet effet, le circuit de la figure 28 comprend de préférence dans ses étages d'entrée des moyens d'amplification sélective dans une bande spectrale avoisinant une fréquence par exemple de 135 kHz, valeur bien adaptée dans le cas d'une plaque en verre trempé de 8 mm d'épaisseur et d'une taille de 2,06 m x 0,8 m.

Le circuit de la figure 28 effectue, comme dans le cas de la figure 18, une élévation au carré et une double intégration du signal.

Toujours dans le cas de plaques épaisses et de dimensions importantes, compte-tenu du temps de parcours important des ondes et de leur atténuation plus lente, la cadence d'acquisition des mesures doit être plus lente. On a choisi ici une cadence de 13 mesures par secondes avec un stylet à vibration axiale.

Dans le cas où l'onde est issue d'un simple impact sur la plaque, on peut le cas échéant demander à l'utilisateur de répéter son impact au même endroit afin d'améliorer la fiabilité. On notera à cet égard que la durée du signal "Pen off" permet si nécessaire d'associer ou de dissocier deux impacts successifs, selon que cette durée est inférieure ou non à un seuil donné. Ainsi on peut réaliser sur une plaque telle qu'une vitrine l'équivalent d'un "double-clic" réalisé avec une souris d'ordinateur personnel.

Enfin la figure 27 illustre un exemple d'un circuit générateur d'impulsions sinusoïdales doubles en quadrature de phase. Il comprend un oscillateur construit autour de l'amplificateur opérationnel A5, dont la sortie commande deux transistors bipolaires T1 et T2 dont les sorties sont reliées aux transducteurs piézo-électriques PZT1 et PZT2 via deux inductances L1 et L2. Le circuit de relaxation R7C4 assure la quadrature en retardant l'ouverture du transistor T2 par rapport à l'ouverture du transistor T1.

Un tel circuit, alimenté par trois batteries sous une tension de 4,5 volts, a une consommation de 15 A et une autonomie d'environ 4500 heures.

La présente invention possède de nombreuses applications, et notamment l'acquisition de données XY dans le cadre de tablettes graphiques associées à des ordinateurs, l'identification de zones (affichettes, annonces, etc...) situées derrière une vitrine de magasin, la localisation d'impacts pour l'entraînement au tir, etc...

Elle n'est nullement limitée aux formes de réalisation décrites et représentées, mais l'homme de l'art saura y apporter toute variante ou modification conforme aux revendications.

**Revendications**

1. Dispositif d'acquisition de coordonnées (x, y) d'une source acoustique (S) appliquée sur une plaque (P) en des positions variables, la plaque comportant un ensemble de récepteurs acoustiques (Re-Rg, Re'-Rg'), et le dispositif comprenant des moyens pour déterminer les instants d'arrivée des ondes acoustiques propagées dans la plaque à partir de la source, et des moyens pour établir des données de coordonnées en fonction de ces instants, la source opérant de façon asynchrone et les moyens de conversion étant aptes à établir les données de coordonnées en fonction de la seule différence entre les temps de propagation des ondes acoustiques vers différents récepteurs, dispositif **caractérisé en ce que** les récepteurs sont constitués par un ensemble de paires de pièces céramiques piézo-électriques fixées rigidement sur la plaque d'un côté et de l'autre de celle-ci et en vis-à-vis l'une de l'autre, et **en ce que** les pièces piézo-électriques de chaque paire sont connectés ensemble de façon à sensiblement annuler le mode de Lamb symétrique (S0) d'une onde acoustique se propageant dans la plaque et atteignant ladite paire, et opérer sur le mode de Lamb antisymétrique (A0) d'une telle onde.

2. Dispositif selon la revendication 1, **caractérisé en ce que** les deux pièces (Re-Rg, Re'-Rg') d'une même paire ont leurs vecteurs de polarisation orientés perpendiculairement et antisymétriquement par rapport à un plan médian de la plaque et sont reliées électriquement en parallèle.

3. Dispositif selon la revendication 1, **caractérisé en ce que** les deux pièces (Re-Rh, Re'-Rh') d'une même paire ont leurs vecteurs de polarisation orientés perpendiculairement et symétriquement par rapport à un plan médian de la plaque et sont reliées électriquement en antiparallèle.

4. Dispositif selon l'une des revendications 1 à 3, **caractérisé en ce qu'**il est prévu quatre paires de pièces disposées aux quatre sommets d'un losange.

5. Dispositif selon l'une des revendications 1 à 4, **caractérisé en ce que** la plaque (P) est une plaque en verre de grandes dimensions constituée par au moins une partie d'une vitrine, et **en ce que** la source est constituée par un objet dur quelconque avec lequel la plaque est soumise à des impacts.

6. Dispositif selon la revendication 5, **caractérisé en ce que** les moyens de conversion comprennent des moyens de filtrage passe-bande centrés sur une fréquence de l'ordre de 100 à 200 kHz.

7. Dispositif selon l'une des revendications 1 à 4, **caractérisé en ce que** la plaque (P) constitue une cible de tir, et **en ce que** la source est constituée par des projectiles notamment d'armes à feu arrivant sur la plaque.

8. Dispositif selon l'une des revendications 1 à 4, **caractérisé en ce que** la source est constituée par un stylet (S) qui comporte des moyens (TP, 2350, 2352) pour émettre à intervalles réguliers des ondes acoustiques, ces moyens d'émission du stylet (S) comprenant des moyens (TP) pour engendrer une vibration à la pointe du stylet selon l'axe de ce dernier.

9. Dispositif selon l'une des revendications 1 à 8, **caractérisé en ce que** les pièces céramiques piézo-électriques (Re-Rh, Re'-Rh') sont fixées sur la plaque par collage.

10. Dispositif selon l'une des revendications 1 à 9, **caractérisé en ce que** les moyens de détermination des instants d'arrivée des ondes comprennent, en association avec chaque récepteur (Re-Rh, Re'-Rh'), un moyen (2301) pour convertir le courant délivré par le récepteur en une tension, un moyen (2302) pour convertir ladite tension en une valeur positive, et un moyen intégrateur (2303, 2304).

11. Dispositif selon la revendication 10, **caractérisé en ce que** le moyen de conversion de courant en tension comprend un amplificateur à transimpédance (2301).

12. Dispositif selon l'une des revendications 10 et 11, **caractérisé en ce que** le moyen de conversion en valeur positive comprend un circuit d'élévation de la tension au carré (2302).

13. Dispositif selon l'une des revendications 10 à 12, **caractérisé en ce que** le moyen intégrateur comprend deux circuits intégrateurs en cascade (2303, 2304).

14. Dispositif selon l'une des revendications 10 à 13, **caractérisé en ce qu'**il comprend en outre deux filtres (2351, 2352) reliés respectivement aux sorties d'au moins deux moyens intégrateurs associés aux deux coordonnées et deux circuits à seuil (2306, 2316) reliés aux sorties des filtres.

15. Dispositif selon l'une des revendications 10 à 14, **caractérisé en ce qu'**il comprend des circuits à seuil (2305) reliés aux sorties des moyens intégrateurs et commandant un double circuit logique de comptage, les deux comptes obtenus étant représentatifs des valeurs absolues des coordonnées.

16. Dispositif selon la revendication 15, **caractérisé en ce qu'**il comprend deux convertisseurs numérique/analogique (2325, 2326) recevant lesdits comptes.

17. Dispositif selon la revendication 16, **caractérisé en ce qu'**il comprend en sortie des convertisseurs numérique/ analogique des moyens amplificateurs à inversion de signe (2341, 2342, 2343, 2344) commandés par des moyens pour déterminer les signes respectifs des différences de temps mesurées.

18. Dispositif selon l'une des revendications 10 à 17 prise en combinaison avec la revendication 8, **caractérisé en ce qu'**il comprend des moyens de filtrage numérique (2320, 2321) pour éliminer un nombre déterminé de premières mesures de temps lors de la mise en contact du stylet avec la plaque.

19. Dispositif selon la revendication 18, **caractérisé en ce que** les moyens de filtrage numérique comprennent des registres à décalage (2320, 2321).

**Patentansprüche**

1. Vorrichtung zum Erfassen der Koordinaten (x, y) einer akustischen Quelle (S), die an verschiedenen Positionen auf einer Platte (P) angeordnet wird, welche Platte eine Gruppe von akustischen Empfängern (Re-Rg, Re'-Rg') umfasst, und welche Vorrichtung Einrichtungen zum Bestimmen der Zeitpunkte der Ankunft akustischer Wellen, die sich in der Platte von der Quelle ausgehend fortpflanzen, und Einrichtungen zum Erstellen der Daten der Koordinaten in Abhängigkeit von diesen Zeitpunkten umfasst, wobei die Quelle asynchron arbeitet und die Umwandlungseinrichtungen die Daten der Koordinaten in Abhängigkeit nur vom Unterschied zwischen den Fortpflanzungszeiten der akustischen Wellen zu den verschiedenen Empfängern erstellen kann, **dadurch gekennzeichnet, daß** die Empfänger aus einer Gruppe von Paaren piezoelektrischer Keramikteile bestehen, die starr an der Platte auf der einen und der anderen Seite und einander gegenüber angebracht sind, und daß die piezoelektrischen Teile jedes Paares so miteinander verbunden sind, daß die symmetrische Lamb-Mode (S0) einer sich in der Platte fortpflanzenden und an dem besagten Paar ankommenden akustischen Welle im wesentlichen unterdrückt wird und mit der antisymmetrischen Lamb-Mode (A0) einer derartigen Welle gearbeitet wird.

**2.** Vorrichtung nach Anspruch 1, **dadurch gekennzeichnet, daß** die beiden Teile (Re-Rg, Re'-Rg') desselben Paares mit ihren Polarisationsvektoren senkrecht und antisymmetrisch bezüglich einer Mittelebene der Platte ausgerichtet und elektrisch parallel geschaltet sind.

**3.** Vorrichtung nach Anspruch 1, **dadurch gekennzeichnet, daß** die beiden Teile (Re-Rh, Re'-Rh') desselben Paares Polarisationsvektoren haben, die senkrecht und symmetrisch bezüglich einer Mittelebene der Platte ausgerichtet sind, und elektrisch antiparallel geschaltet sind.

**4.** Vorrichtung nach einem der Ansprüche 1 bis 3, **dadurch gekennzeichnet, daß** vier Paare von Teilen vorgesehen sind, die an den vier Scheiteln einer Raute angeordnet sind.

**5.** Vorrichtung nach einem der Ansprüche 1 bis 4, **dadurch gekennzeichnet, daß** die Platte (P) eine Glasplatte mit großen Abmessungen ist, die wenigstens einen Teil eines Glaskastens bildet, und daß die Quelle aus irgendeinem harten Gegenstand besteht, dessen Stößen die Platte ausgesetzt wird.

**6.** Vorrichtung nach Anspruch 5, **dadurch gekennzeichnet, daß** die Umwandlungseinrichtungen Bandpaßfiltereinrichtungen umfassen, die bei einer Frequenz in der Größenordnung von 100 bis 200 kHz zentriert sind.

**7.** Vorrichtung nach einem der Ansprüche 1 bis 4, **dadurch gekennzeichnet, daß** die Platte (P) eine Schießzielscheibe bildet und daß die Quelle aus Geschossen, insbesondere von Feuerwaffen, besteht, die auf der Platte auftreffen.

**8.** Vorrichtung nach einem der Ansrpüche 1 bis 4, **dadurch gekennzeichent**, daß die Quelle aus einem Stift (S) besteht, der Einrichtungen (TP, 2350, 2352) zum Ausgeben von akustischen Wellen in regelmäßigen Intervallen umfaßt, welche Ausgabeeinrichtungen des Stiftes (S), Einrichtungen (TP) zu Erzeugen einer Schwingung an der Spitze des Stiftes längs seiner Achse umfassen.

**9.** Vorrichtung nach einem der Ansprüche 1 bis 8, **dadurch gekennzeichnet, daß** die piezoelektrischen keramischen Teile (Re-Rh, Re'-Rh') durch Kleben auf der Platte befestigt sind.

**10.** Vorrichtung nach einem der Ansprüche 1 bis 9, **dadurch gekennzeichent**, daß die Einrichtungen zum Bestimmen der Ankunftszeitpunkte der Wellen in Verbindung mit jedem Empfänger (Re-Rh, Re'-Rh') eine Einrichtung (2301) zum Umwandeln des vom Empfänger gelieferten Stomes in eine Spannung, eine Einrichtung (2302) zum Umwandeln dieser Spannung in einen positiven Wert und eine Integratoreinrichtung (2303, 2304) umfaßt.

**11.** Vorrichtung nach Anspruch 10, **dadurch gekennzeichnet, daß** die Einrichtung zum Umwandeln des Stromes in eine Spannung einen Transimpedanzverstärker (2301) umfaßt.

**12.** Vorrichtung nach einem der Ansprüche 10 und 11, **dadurch gekennzeichent**, daß die Einrichtung zum Umwandeln in einen positiven Wert eine Schaltung (2302) zum Quadrieren der Spannung umfaßt.

**13.** Vorrichtung nach einem der Ansprüche 10 bis 12, **dadurch gekennzeichnet, daß** die Integratoreinrichtung zwei in Kaskade angeordnete Integratorschaltungen (2303, 2304) umfaßt.

**14.** Vorrichtung nach einem der Ansprüche 10 bis 13, **dadurch gekennzeichent**, daß sie weiterhin zwei Filter (2351, 2352), die jeweils mit den Ausgängen von wenigstens zwei Integratoreinrichtungen verbunden sind, die zu den beiden Koordinaten gehören, und zwei Schwellenschaltungen (2306, 2316) umfaßt, die mit den Ausgängen der Filter verbunden sind.

**15.** Vorrichtung nach einem der Ansprüche 10 bis 14, **dadurch gekennzeichnet, daß** sie Schwellenschaltungen (2305) umfaßt, die mit den Ausgängen der Integratoreinrichtungen verbunden sind und eine zweifache logische Zählschaltung steuern, wobei die beiden erhaltenen Zählwerte die Absolutwerte der Koordinaten widergeben.

**16.** Vorrichtung nach Anspruch 15, **dadurch gekennzeichnet, daß** sie zwei Analogdigitalwandler (2325, 2326) umfaßt, die die besagten Zählwerte empfangen.

**17.** Vorrichtung nach Anspruch 16, **dadurch gekennzeichnet, daß** sie am Ausgang der Analogdigitalwandler Umkehrverstärkereinrichtungen (2341, 2342, 2343, 2344) umfaßt, die über Einrichtungen zum Bestimmen der jeweiligen Vorzeichen der gemessenen Zeitunterschiede gesteuert werden.

18. Vorrichtung nach einem der Ansprüche 10 bis 17 in Kombination mit Anspruch 8, **dadurch gekennzeichent**, daß sie numerische Filtereinrichtungen (2320, 2321) umfaßt, um eine Zahl auszuschließen, die bei vorherigen Zeitmessungen betimmt wurde, bei denen der Stift mit der Platte in Kontakt stand.

19. Vorrichtung nach Anspruch 18, **dadurch gekennzeichnet, daß** die numerischen Filtereinrichtungen Schieberegister (2320, 2321) umfassen.

**Claims**

1. A device for acquiring (x, y) coordinates of an acoustic source (S) pressed against various positions of a plate (P), the plate having a set of acoustic receivers (Re-Rg, Re'-Rg'), and the device comprising means for determining the arrival instants of the acoustic waves propagating in the plate from the source, and means for establishing coordinate data as a function of said instants, the source operating asynchronously and the conversion means being suitable for establishing the coordinate data as a function solely of the differences between the propagation times of the acoustic waves to the various receivers, the device being **characterized in that** the receivers are constituted by a set of pairs of piezoelectric ceramic pieces fixed rigidly to the plate on opposite sides thereof and facing each other, and **in that** the piezoelectric pieces of each pair are connected together so as substantially to cancel the symmetrical Lamb mode (S0) of an acoustic wave propagating in the plate and reaching said pair, and to operate on the asymmetrical Lamb mode (A0) of such a wave.

2. A device according to claim 1, **characterized in that** the two pieces (Re-Rg, Re'-Rg') of the same pair have their polarization vectors oriented perpendicularly and antisymmetrically relative to a midplane of the plate and are electrically connected in parallel.

3. A device according to claim 1, **characterized in that** the two pieces (Re-Rh, Re'-Rh') of the same pair have their polarization vectors oriented perpendicularly and symmetrically relative to a midplane of the plate and are electrically connected in antiparallel.

4. A device according to any one of claims 1 to 3, **characterized in that** four pairs of pieces are provided located at the four corners of a lozenge.

5. A device according to any one of claims 1 to 4, **characterized in that** the plate (P) is a glass plate of large dimensions constituted by at least a portion of a display cabinet, and **in that** the source is constituted by any hard object used for tapping against the plate.

6. A device according to claim 5, **characterized in that** the conversion means comprise lowpass filter means centered on a frequency of about 100 kHz to 200 kHz.

7. A device according to any one of claims 1 to 4, **characterized in that** the plate (P) constitutes a shooting target, and **in that** the source is constituted by projectiles striking the plate, in particular from firearms.

8. A device according to any one of claims 1 to 4, **characterized in that** the source is constituted by a stylus (S) including means (TP, 2350, 2352) for emitting acoustic waves at regular intervals, said emission means of the stylus (S) comprising means (TP) for generating vibration of the stylus tip along the axis of the stylus.

9. A device according to any one of claims 1 to 8, **characterized in that** the piezoelectric ceramic pieces (Re-Rh, Re'-Rh') are fixed to the plate by adhesive.

10. A device according to any on one of claims 1 to 9, **characterized in that** the means for determining the arrival instants of the waves comprise, in association with each receiver (Re-Rh, Re'-Rh'), means (2301) for converting the current delivered by the receiver into a voltage, means (2302) for converting said voltage into a positive value, and integrator means (2303, 2304).

11. A device according to claim 10, **characterized in that** the means for converting current into voltage comprise a transimpedance amplifier (2301).

**12.** A device according to claim 10 or claim 11, **characterized in that** the means for converting into a positive value comprise a circuit (2302) for raising the voltage to the second power.

**13.** A device according to any one of claims 10 to 12, **characterized in that** the integrator means comprise two integrator circuits (2303, 2304) in cascade.

**14.** A device according to any one of claims 10 to 13, **characterized in that** it further comprises two filters (2351, 2352) connected respectively to the outputs of at least two integrator means associated with the two coordinates and two threshold circuits (2306, 2316) connected to the outputs of the filters.

**15.** A device according to any one of claims 10 to 14, **characterized in that** it comprises threshold circuits (2305) connected to the outputs of the integrator means and controlling two logical counter circuits, the two counts obtained being representative of the absolute values of the coordinates.

**16.** A device according to claim 15, **characterized in that** it comprises two digital-to-analog converters (2325, 2326) receiving said counts.

**17.** A device according to claim 16, **characterized in that** it comprises sign-inverting amplifier means (2341, 2342, 2343, 2344) at the outputs from the digital-to-analog converters and controlled by means for determining the respective signs of the measured time differences.

**18.** A device according to any one of claims 10 to 17 taken in combination with claim 8, **characterized in that** it comprises digital filter means (2320, 2321) for eliminating a determined number of first time measurements when the stylus is put into contact with the plate.

**19.** A device according to claim 18, **characterized in that** the digital filter means comprise shift registers (2320, 2321).

S

E $\longleftarrow$

$\Delta x = V.\Delta t$

R

## FIG.1

P

P

Ra

$x.\vec{I}$

C

$\vec{I}$

Rb

S

0

$\Delta Ta$

$\Delta Tb$

## FIG.2

S

Ry⁻

Rꝏ⁻

Rꝏ⁺

T

C

P

## FIG.3

Ry⁺

FIG.4

FIG.5

FIG_6

Inclinaison

Rotation

Déplacement

EP 0 784 783 B1

TP₁

λ/4

TP2

S

110

Rx-

P

C

Ry+

FIG.7

S

TP₁

TP2

110

Rx-

C

P

10

0°

10

90°

10

180°

10

270°

FIG.8

FIG.9

FIG.10

FIG.11a

FIG.11b

FIG.12a

FIG.12b

FIG.13

FIG.14a

FIG.14b

FIG_15

FIG_16

FIG.17

FIG_18

FIG_19

FIG. 20...

FIG. 20 suite

EP 0 784 783 B1

FIG_21

Impulsions
electriques

Monostable
redéclenchable

74 LS 123  5ms

Sortie registre à
décalage de 8bits

74 LS 164

Sortie porte "ET"

Signal reçu

choc

FIG. 22

DD− onde plane diffractée "directe" x− P S onde plane diffractée "directe" x +

Rx−

DD+

Rx+

0,5mm

X = X0

FIG. 23

FIG.24

FIG.25

FIG.26a

FIG.26b

FIG.27

FIG. 28

FIG. 29